(19) Europäisches Patentamt / European Patent Office / Office européen des brevets

(11) **EP 2 579 074 A1**

(12) **EUROPEAN PATENT APPLICATION**
published in accordance with Art. 153(4) EPC

(43) Date of publication:
**10.04.2013 Bulletin 2013/15**

(21) Application number: **11789578.9**

(22) Date of filing: **02.05.2011**

(51) Int Cl.:
*G02B 5/26* *(2006.01)*     *C03C 17/28* *(2006.01)*

(86) International application number:
**PCT/JP2011/060509**

(87) International publication number:
**WO 2011/152169 (08.12.2011 Gazette 2011/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2010 JP 2010127687**

(71) Applicant: **FUJIFILM Corporation
Tokyo 106-8620 (JP)**

(72) Inventors:
• **HAKUTA, Shinya
Ashigarakami-gun
Kanagawa 258-8577 (JP)**

• **TANI, Takeharu
Ashigarakami-gun
Kanagawa 258-8577 (JP)**
• **KIYOTO, Naoharu
Ashigarakami-gun
Kanagawa 258-8577 (JP)**

(74) Representative: **HOFFMANN EITLE
Patent- und Rechtsanwälte
Arabellastrasse 4
81925 München (DE)**

(54) **HEAT-RAY SHIELDING MATERIAL**

(57)     A heat-ray shielding material including: a substrate; and a metal particle-containing layer containing at least one kind of metal particles, the metal particle-containing layer being on the substrate, wherein the metal particles contain flat metal particles each having a substantially hexagonal shape or a substantially disc shape in an amount of 60% by number or more, and wherein a coefficient of variation of a distribution of distances between centers of the flat metal particles adjacent to each other is 20% or less.

FIG. 5

**Description**

Technical Field

The present invention relates to a heat-ray shielding material excellent in reflectance with respect to infrared rays such as near-infrared rays and excellent in transmittance with respect to visible light.

Background Art

In recent years, as one of energy saving measures to reduce carbon dioxide emissions, there have been developed heat-ray shielding materials for windows of buildings and automobiles. From the viewpoint of heat ray-shielding properties (solar heat gain coefficient), materials of heat ray reflective type which re-radiate no heat are more desirable than heat absorbing materials which re-radiate absorbed light into rooms (in an amount of about 1/3 of the solar radiation energy absorbed) and various techniques have been proposed.

For example, Ag metal thin films are generally used as heat ray-reflecting materials because of their high reflectance.

However, Ag metal thin films reflect not only visible light and heat rays but also radio waves, and thus have problems with their low visible light transmittance and low radio wave transmittance.

In order to increase the visible light transmittance, for example, Low-E-glass (e.g., a product of Asahi Glass Co., Ltd.) which utilizes an Ag-ZnO-multilayered film has been proposed and widely adopted in buildings.

However, Low-E glass has a problem with its low radio wave transmittance because the Ag metal thin film is formed on a surface of the glass.

In order to solve the above problems, for example, there has been island-shaped Ag particle-attached glass to which radio wave transmittance has been imparted. There has been proposed a glass where granular Ag is formed by annealing an Ag thin film which has been formed through vapor deposition (see PTL 1).

However, in this proposal, since granular Ag is formed by annealing, difficulty is encountered in controlling the size and the shape of particles and the area ratio thereof, in controlling the reflection wavelength and reflection band of heat rays and in increasing the visible light transmittance.

Furthermore, there have been proposed filters using Ag flat particles as an infrared ray-shielding filter (see PTLs 2 to 6).

However, these proposals are each intended for use in plasma display panels. Hence, they use particles of small volume in order to improve the absorbability of light in the infrared wavelength region and they do not use the Ag flat particles as a material to shield heat rays (a material that reflects heat rays).

Therefore, there has been proposed a glass laminate containing a glass substrate and a silver layer having a thickness of 5 nm to 1 $\mu$m where the silver layer is formed of silver particles having an average particle diameter of 100 nm to 0.5 mm and is laminated on the surface of the glass substrate (see PTL 7).

In this proposal, silver particles are formed by performing annealing after silver has been sputtered, making it impossible to form silver particles having a uniform particle diameter. Also, it is impossible to control the positions of silver particles in the silver layer. This raises problems that the haze increases and it reflects visible light rays close to the infrared region to problematically become a mirror.

As described above, strong demand has been arisen for rapid development of a heat-ray shielding material excellent in reflectance with respect to infrared rays such as near-infrared rays and excellent in transmittance with respect to visible light.

Citation List

Patent Literature

PTL 1: Japanese Patent (JP-B) No. 3454422
PTL 2: Japanese Patent Application Laid-Open (JP-A) No. 2007-108536
PTL 3: JP-A No. 2007-178915
PTL 4: JP-A No. 2007-138249
PTL 5: JP-A No. 2007-138250
PTL 6: JP-A No. 2007-154292
PTL 7: JP-B No. 3734376

Summary of Invention

Technical Problem

The present invention aims to solve the above existing problems and achieve the following objects. That is, the present invention aims to provide a heat-ray shielding material excellent in reflectance with respect to infrared rays such as near-infrared rays and excellent in transmittance with respect to visible light.

Solution to Problem

Means for solving the above problems are as follows.

<1> A heat-ray shielding material including:

a substrate; and
a metal particle-containing layer containing at least one kind of metal particles,
the metal particle-containing layer being on the substrate,
wherein the metal particles contain flat metal particles each having a substantially hexagonal shape or a substantially disc shape in an amount of 60% by number or more, and
wherein a coefficient of variation of a distribution of distances between centers of the flat metal particles adjacent to each other is 20% or less.

<2> The heat-ray shielding material according to <1>, wherein when the heat ray-shielding material is viewed from above of the heat-ray shielding material, an area ratio [(B/A) × 100] is 20% or higher where A is an area of the substrate and B is a total value of areas of the flat metal particles.
<3> The heat-ray shielding material according to <1> or <2>, wherein the coefficient of variation of a distribution of distances between centers of the flat metal particles adjacent to each other is 15% or less.
<4> The heat-ray shielding material according to <1>, wherein the coefficient of variation of a distribution of distances between centers of the flat metal particles adjacent to each other is 11% or less and when the heat ray-shieling material is viewed from above of the heat-ray shielding material, an area ratio [(B/A) × 100] is 30% or higher where A is an area of the substrate and B is a total value of areas of the flat metal particles.
<5> The heat-ray shielding material according to <1>, wherein the coefficient of variation of a distribution of distances between centers of the flat metal particles adjacent to each other is 6.5% or less and when the heat ray-shielding material is viewed from above of the heat-ray shielding material, an area ratio [(B/A) × 100] is 40% or higher where A is an area of the substrate and B is a total value of areas of the flat metal particles.
<6> The heat-ray shielding material according to <1>, wherein the coefficient of variation of a distribution of distances between centers of the flat metal particles adjacent to each other is 5% or less and when the heat ray-shielding material is viewed from above of the heat-ray shielding material, an area ratio [(B/A) × 100] is 45% or higher where A is an area of the substrate and B is a total value of areas of the flat metal particles.
<7> The heat-ray shielding material according to <1>, wherein the coefficient of variation of a distribution of distances between centers of the flat metal particles adjacent to each other is 3.5% or less and when the heat ray-shielding material is viewed from above of the heat-ray shielding material, an area ratio [(B/A) × 100] is 50% or higher where A is an area of the substrate and B is a total value of areas of the flat metal particles.
<8> The heat-ray shielding material according to any one of <1> to <7>, wherein the flat metal particles contain at least silver.
<9> The heat-ray shielding material according to any one of <1> to <8>, wherein a thickness of a region where the flat metal particles are present is 100 nm or smaller.
<10> The heat-ray shielding material according to any one of <1> to <10>, wherein the heat-ray shielding material has a solar heat gain coefficient of 70% or lower.
<11> The heat-ray shielding material according to any one of <1> to <11>, wherein the heat-ray shielding material has a transmittance of 60% or higher with respect to visible light rays.

Advantageous Effects of Invention

The present invention can provide a heat-ray shielding material excellent in reflectance with respect to infrared rays such as near-infrared rays and excellent in transmittance with respect to visible light. This can solve the above existing problems and achieve the above objects.

Brief Description of Drawings

Fig. 1A is a schematic perspective view of a substantially disc-shaped flat particle which is one exemplary flat particle contained in a heat ray-shielding material of the present invention, where the horizontal double-sided arrow is the diameter thereof and the vertical double-sided arrow is the thickness thereof.

Fig. 1B is a schematic perspective view of a substantially hexagonal flat particle which is one exemplary flat particle contained in a heat ray-shielding material of the present invention, where the horizontal double-sided arrow is the diameter thereof and the vertical double-sided arrow is the thickness thereof.

Fig. 2 is a schematic plan view of an embodiment where flat particles are arranged in a heat ray-shielding material of the present invention.

Fig. 3A is a schematic cross-sectional view of a metal particle-containing layer containing flat metal particles in a heat ray-shielding material of the present invention, where the flat metal particles are present in an ideal state.

Fig. 3B is a schematic cross-sectional view of a metal particle-containing layer containing flat metal particles in a heat ray-shielding material of the present invention, which is for explaining angles ($\theta$) formed between a surface of a substrate and planes of flat particles.

Fig. 3C is a schematic cross-sectional view of a metal particle-containing layer containing flat metal particles in a heat ray-shielding material of the present invention, which illustrates a region where the flat metal particles are present in a depth direction of the metal particle-containing layer of the heat ray-shielding material.

Fig. 4 is a schematic cross-sectional view of one example of a heat-ray shielding material of the present invention, wherein "A" is a metal particle-containing layer A, "B" is a metal particle-containing layer B and "L" is a distance between the neighboring metal particle-containing layers.

Fig. 5 is a SEM image of the heat-ray shielding material of Example 1 which is observed at a magnification of $\times$ 20,000.

Fig. 6 is a graph of one exemplary relationship among area ratio, haze and CV seen in the graph, wherein the percentages are area ratios.

Fig. 7 is a graph of one exemplary relationship among area ratio, haze and CV seen in the graph, wherein the percentages are area ratios.

Fig. 8 is a graph of one exemplary relationship among average particle thickness, haze and CV, wherein the values in nm are thicknesses.

Fig. 9 is a graph of one exemplary relationship between binder thickness and haze.

Fig. 10A is a cross-sectional view of one exemplary simulation model where the binder thickness is 0.02 $\mu$m.

Fig. 10B is a cross-sectional view of one exemplary simulation model where the binder thickness is 0.10 $\mu$m.

Fig. 10C is a cross-sectional view of one exemplary simulation model where the binder thickness is 0.35 $\mu$m.

Fig. 11 is a graph of spectrometric spectra of the heat-ray shielding material of Example 1, where "T" is a transmission spectrum and "R" is a reflection spectrum.

Description of Embodiments

(Heat-ray shielding material)

A heat-ray shielding material of the present invention includes a substrate and a metal particle-containing layer; and, if necessary, further includes other members.

<Metal particle-containing layer>

The metal particle-containing layer is not particularly limited and may be appropriately selected depending on the intended purpose, so long as it is a layer containing at least one kind of metal particles and formed on a substrate.

-Metal particles-

The metal particles are not particularly limited and may be appropriately selected depending on the intended purpose so long as they contain flat particles of a metal (hereinafter may be referred to as "flat metal particles"). Examples thereof include granular particles, cubic particle, hexagonal particles, octahedral particles and rod-like particles.

The state of the metal particles in the metal particle-containing layer is not particularly limited and may be appropriately selected depending on the intended purpose so long as they are located substantially horizontally with respect to the surface of the substrate. Examples of the state include a state where the substrate is substantially in contact with the metal particles, and a state where the substrate and the metal particles are arranged a certain distance apart in a depth direction of the heat ray-shielding material.

The size of the metal particles is not particularly limited and may be appropriately selected depending on the intended purpose. For example, the metal particles have an average circle-equivalent diameter of 500 nm or smaller.

The material for the metal particles is not particularly limited and may be appropriately selected depending on the intended purpose. Preferred are silver, gold, aluminum, copper, rhodium, nickel and platinum, from the viewpoint of high reflectance with respect to heat rays (infrared rays).

-Flat metal particles-

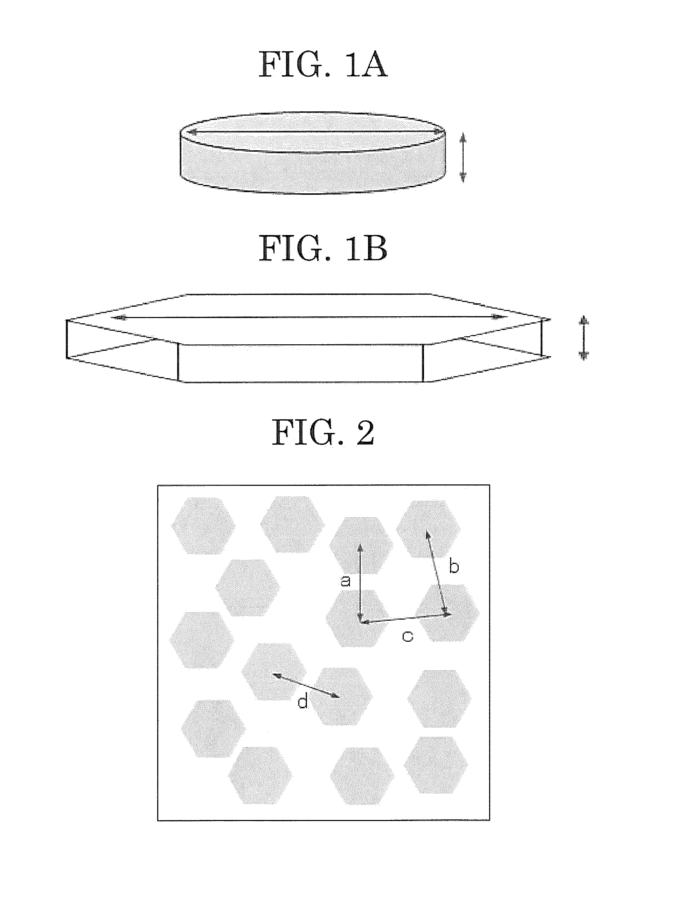

The flat metal particle is not particularly limited and may be appropriately selected depending on the intended purpose so long as it is composed of two flat planes (see Figs. 1A and 1B). The flat metal particle has, for example, a substantially hexagonal shape, a substantially disc shape or a substantially triangular shape. Among these shapes, the flat metal particle particularly preferably has a substantially hexagonal shape or a substantially disc shape, from the viewpoint of high visible light transmittance.

The above flat plane refers to a plane containing the diameter as illustrated in Figs. 1A and 1B.

The substantially disc-shape is not particularly limited and may be appropriately selected depending on the intended purpose as long as when the flat metal particle is observed from above the flat plane under a transmission electron microscope (TEM), the observed shape is a round shape without angular corners.

The substantially hexagonal shape is not particularly limited and may be appropriately selected depending on the intended purpose as long as when observed above the flat plane under a transmission electron microscope (TEM), the observed shape is a substantially hexagonal. The angles of the hexagonal shape may be acute or obtuse. From the viewpoint of reducing absorption of light having a wavelength in the visible light region, the angles of the hexagonal shape are preferably obtuse. The degree of the obtuseness is not particularly limited and may be appropriately selected depending on the intended purpose.

Among the metal particles present in the metal particle-containing layer, the amount of the flat metal particles each having a substantially hexagonal shape or a substantially disc shape is preferably 60% by number or more, more preferably 65% by number or more, particularly preferably 70% by number or more, relative to the total number of the metal particles. When the rate of the flat metal particles is less than 60% by number, the visible light transmittance may decrease.

[Plane orientation]

In one embodiment of the heat ray-shielding material of the present invention, the flat planes of the flat metal particles are oriented at a predetermined range with respect to the surface of the substrate.

The state of the flat metal particles is not particularly limited and may be appropriately selected depending on the intended purpose. From the viewpoint of increasing the reflectance with respect to heat rays, preferably, the flat metal particles are located substantially horizontally with respect to the surface of the substrate.

The plane orientation is not particularly limited and may be appropriately selected depending on the intended purpose so long as the flat planes of the flat metal particles are in substantially parallel with at a predetermined range with respect to the surface of the substrate. The angle in the plane orientation is 0° to $\pm$ 30°, preferably 0° to $\pm$ 20°.

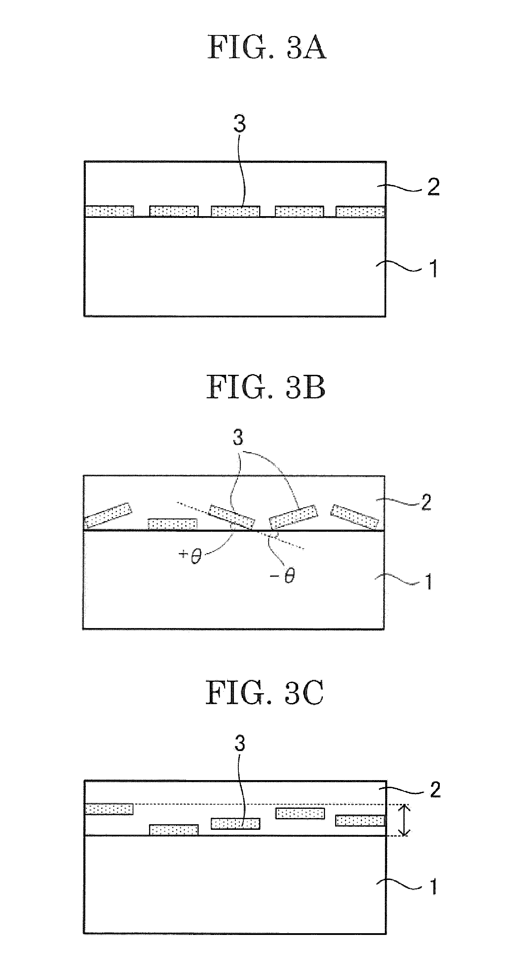

Here, Figs. 3A to 3C are schematic cross-sectional views each illustrating the state of the flat metal particles contained in the metal particle-containing layer of the heat ray-shielding material of the present invention. Fig. 3A illustrates the most ideal state of the flat metal particles 3 in the metal particle-containing layer 2. Fig. 3B is an explanatory view for an angle ($\pm\theta$) formed between the surface of the substrate 1 and the plane of the flat metal particle 3. Fig. 3C is an explanatory view for a region where the flat metal particles are present in the metal particle-containing layer 2 in a depth direction of the heat ray-shielding material.

In Fig. 3B, the angle ($\pm\theta$) formed between the surface of the substrate 1 and the flat plane of the flat metal particle. 3 or an extended line of the flat plane thereof corresponds to the predetermined range in the plane orientation. In other words, the plane orientation refers to a state where when a cross-section of the heat ray-shielding material is observed, a tilt angle ($\pm\theta$) illustrated in Fig. 3B is small. In particular, Fig. 3A illustrates a state where the flat planes of the flat metal particles 3 are in contact with the surface of the substrate 1 i.e., a state where $\theta$ is 0°. When the angle formed between the surface of the substrate 1 and the plane of the flat metal particle 3; i.e., $\theta$ in Fig. 3B, exceeds $\pm30$°, the reflectance of the heat ray-shielding material with respect to light having a specific wavelength (e.g., a wavelength from the near-infrared region to a longer wavelength region of the visible light region) may decrease, and the haze may increase.

From the viewpoint of increasing resonance reflectance, the thickness of the region where the metal particles are present (i.e., thickness of the particle-containing region f($\lambda$) which corresponds to a region shown by the double-sided arrow in Fig. 3C) is preferably 2,500/(4n) nm or small and, from the viewpoint of reducing the haze with respect to visible light, the thickness of the region where the metal particles are present is more preferably 700/(4n) nm or smaller, particularly preferably 400/(4n) nm or smaller, where n is an average refractive index of the surrounding region of the metal particles. Specifically, the thickness of the region where the metal particles are present is preferably 100 nm or smaller.

When the above thickness is larger than 2,500/(4n) nm, the haze may increase to reduce the amplification effect of the amplitudes of reflected waves due to their phases at the interfaces of the metal particle-containing layer on the upper side and on the lower side of the heat-ray shielding material, so that the reflectance at a resonance wavelength may greatly decrease. The case where the thickness of the region where the metal particles are present is less than twice the thickness of the flat metal particles may be referred to as "monolayer" or "monolayered."

[Evaluation of plane orientation]

The method for evaluating whether or not the flat planes of the flat metal particles are plane-oriented with respect to the surface of the substrate is not particularly limited and may be appropriately selected depending on the intended purpose. Examples thereof include a method including preparing an appropriate cross-sectional piece and observing the substrate and the flat metal particles in the piece for evaluation. In one specific method, the heat ray-shielding material is cut with a microtome or a focused ion beam (FIB) to prepare a cross-sectional sample or a cross-sectional piece of the heat ray-shielding material; the thus-prepared sample or piece is observed under various microscopes (e.g., a field emission scanning electron microscope (FE-SEM)); and the obtained images are used for evaluation.

In the heat ray-shielding material of the present invention, when the binder covering the flat metal particles is swelled with water, the cross-sectional sample or cross-sectional piece may be prepared by freezing the heat ray-shielding material in liquid nitrogen and by cutting the resultant sample with a diamond cutter mounted to a microtome. In contrast, when the binder covering the flat metal particles in the heat ray-shielding material is not swelled with water, the cross-sectional sample or piece may be prepared directly.

The method for observing the above-prepared cross-sectional sample or piece is not particularly limited and may be appropriately selected depending on the intended purpose so long as it can determine whether or not the flat planes of the flat metal particles are plane-oriented with respect to the surface of the substrate in the sample. The observation can be performed under, for example, a FE-SEM, a TEM and an optical microscope. The cross-sectional sample may be observed under a FE-SEM and the cross-sectional piece may be observed under a TEM. When the FE-SEM is used for evaluation, the FE-SEM preferably has a spatial resolution with which the shapes of the flat metal particles and the tilt angles ($\pm\theta$ illustrated in Fig. 3B) can be clearly observed.

[Average circle-equivalent diameter and distribution of average circle-equivalent diameter]

The average circle-equivalent diameter of the flat metal particles is not particularly limited and may be appropriately selected depending on the intended purpose, but is preferably 10 nm to 5,000 nm, more preferably 30 nm to 1,000 nm, particularly preferably 70 nm to 500 nm.

When the average circle-equivalent diameter is smaller than 10 nm, the aspect ratio of the flat metal particles becomes small and their shapes may tend to be spherical. In addition, the peak wavelength of the transmission spectrum may be 500 nm or shorter. Furthermore, the flat metal particles contribute to absorption more than to reflection, so that sufficient heat-ray reflecting property cannot be obtained in some cases. When the average circle-equivalent diameter is greater than 5,000 nm, the haze (light scattering) increases, so that the transparency of the substrate may be impaired.

Here, the term "average circle-equivalent diameter" means an average value of the primary plane diameters (maximum lengths) of 200 flat metal particles randomly selected from the images obtained by observing metal particles under a TEM.

Two or more kinds of metal particles having different average circle-equivalent diameters may be incorporated into the metal particle-containing layer. In this case, there may be two or more peaks of the average circle-equivalent diameter of the metal particles. In other words, the metal particles may have two average circle-equivalent diameters.

In the heat ray-shielding material of the present invention, the coefficient of variation in the particle size distribution of the flat metal particles is not particularly limited and may be appropriately selected depending on the intended purpose, but is preferably 30% or lower, more preferably 10% or lower.

When the variation coefficient is higher than 30%, the wavelength region of heat rays reflected by the heat ray-shielding material may become broad.

Here, the variation coefficient in the particle size distribution of the flat metal particle is a value (%) which is obtained, for example, by plotting the distribution range of the particle diameters of the 200 flat metal particles selected in the above-described manner for calculation of the average circle-equivalent diameter thereof to determine a standard deviation of the particle size distribution and by dividing the standard deviation by the above-obtained average value (average circle-equivalent diameter) of the flat planes' diameters (maximum lengths).

[Aspect ratio]

The aspect ratio of the flat metal particles is not particularly limited and may be appropriately selected depending on the intended purpose. The aspect ratio thereof is preferably 2 to 80, more preferably 4 to 60, since high reflectance can be obtained from a longer wavelength region of the visible light region to the near-infrared region.

When the aspect ratio is less than 2, the reflection wavelength is shorter than 600 nm. Whereas when the aspect ratio is more than 80, the reflection wavelength is longer than 2,000 nm. In both cases, sufficient heat-ray reflectivity cannot be obtained in some cases.

The aspect ratio refers to a value obtained by dividing the average circle-equivalent diameter of the flat metal particles by an average particle thickness of the flat metal particles. The average particle thickness corresponds to the interdistance of the flat planes of the flat metal particles as illustrated in, for example, Figs. 1A and 1B, and can be measured with an atomic force microscope (AFM).

The method for measuring the average particle thickness with the AFM is not particularly limited and may be appropriately selected depending on the intended purpose. In one exemplary method, a particle dispersion liquid containing flat metal particles is dropped on a glass substrate, followed by drying, to thereby measure the thickness of each particle.

[Region where flat metal particles are present]

In the heat ray-shielding material of the present invention, as illustrated in Fig. 3C, the metal particle-containing layer 2 preferably exists within a range of 0 to $(\lambda/n)/4$ in a depth direction from the horizontal surface of the heat ray-shielding material, where $\lambda$ is a plasmon resonance wavelength of the metal forming the flat metal particles 3 contained in the metal particle-containing layer 2 and n is a refractive index of the medium of the metal particle-containing layer 2. When the metal particle-containing layer 2 exists in a broader range than this range, the amplification effect of the amplitudes of reflected waves due to their phases at the interfaces of the metal particle-containing layer on the upper side and on the lower side of the heat-ray shielding material, so that the visible light transmittance and the maximum heat-ray reflectance may decrease.

The plasmon resonance wavelength $\lambda$ of the metal forming the flat metal particles contained in the metal particle-containing layer is not particularly limited and may be appropriately selected depending on the intended purpose. The plasmon resonance wavelength $\lambda$ thereof is preferably 400 nm to 2,500 nm from the viewpoint of obtaining heat-ray reflectivity. More preferably, the plasmon resonance wavelength $\lambda$ thereof is 700 nm to 2,500 nm from the viewpoint of reducing haze (light scattering) with respect to visible light to thereby obtain visible light transmittance.

The medium of the metal particle-containing layer is not particularly limited and may be appropriately selected depending on the intended purpose. Examples thereof include polyvinylacetal resins, polyvinylalcohol resins, polyvinylbutyral resins, polyacrylate resins, polymethyl methacrylate resins, polycarbonate resins, polyvinyl chloride resins, saturated polyester resins, polyurethane resins, polymers such as naturally occurring polymers (e.g., gelatin and cellulose) and inorganic compounds (e.g., silicon dioxide and aluminum oxide).

The refractive index n of the medium is preferably 1.4 to 1.7.

[Area ratio of flat metal particles (surface density)]

When A and B are respectively an area of the substrate and the total value of areas of the flat metal particles when the heat ray-shielding material is viewed from above of the heat-ray shielding material, the area ratio of $[(B/A) \times 100]$ is preferably 15% or more, more preferably 20% or more.

When the area ratio is less than 15%, the maximum reflectance with respect to heat rays decreases, so that satisfactory heat-shielding effects cannot be obtained in some cases.

The above area ratio can be measured, for example, as follows. Specifically, the heat ray-shielding material is observed from above of the substrate thereof under a SEM or an AFM (atomic force microscope) and the resultant image is subjected to image processing.

[Distance between neighboring metal particle-containing layers]

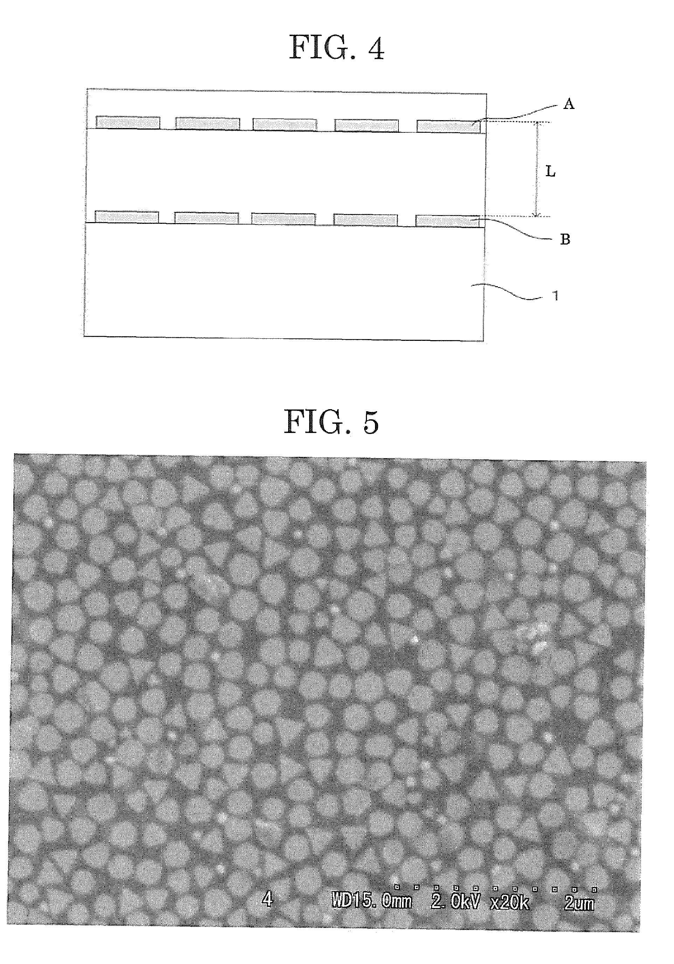

In the heat ray-shielding material of the present invention, the flat metal particles are arranged in the form of the metal particle-containing layer containing the flat metal particles, as illustrated in Figs. 3A to 3C and 4.

As illustrated in Figs. 3A to 3C, the metal particle-containing layer may be a single layer or as illustrated in Fig. 4, the metal particle-containing layer may be formed of plurality of the metal particle-containing layers. When the metal particle-containing layer may be formed of plurality of the metal particle-containing layers as illustrated in Fig. 4, the heat ray-shielding material can have shielding property with respect to rays of an intended wavelength region.

When providing a plurality of the metal particle-containing layers, the distance between the metal particle-containing layers is preferably adjusted to 15 $\mu$m or greater, more preferably 30 $\mu$m or greater, particularly preferably 100 $\mu$m or greater, in order to suppress large influences due to coherent optical interference between the metal particle-containing layers and keep the metal particle-containing layers independent.

When the distance therebetween is smaller than 15 $\mu$m, the pitch width of interference peaks observed between the metal particle-containing layers is greater than 1/10 the half width of resonance peaks of the metal particle-containing layers containing the flat metal particles (i.e., about 300 nm to about 400 nm), potentially affecting the reflection spectrum.

The distance between the metal particle-containing layers can be measured, for example, using an SEM image of a cross-sectional sample of the heat-ray shielding material.

[Coefficient of variation of the distribution of distances between the centers of flat metal particles adjacent to each other (or neighboring flat metal particles)]

The coefficient of variation of the distribution of distances between the centers of flat metal particles adjacent to each other (the coefficient of variation of the distribution of distances between the centers of neighboring flat metal particles) is a value that indicates the degree of variation in the distances between the centers of neighboring flat metal particles.

The coefficient of variation (CV) of the distribution of distances between the centers of neighboring flat metal particles means a value calculated from (standard deviation of distances between the centers of particles the closest to each other)/(average of distances between the centers of particles the closest to each other) $\times$ 100 (%).

The coefficient of variation (CV) thereof is 20% or less, preferably 15% or less, more preferably 11% or less, still more preferably 6.5% or less, particularly preferably 5% or less, most preferably 3.5% or less.

When it is higher than 20%, the haze may increases, so that the transparency may be impaired.

The coefficient of variation can be calculated using, for example, a simulation model made by the FDTD method (Finite Difference Time Domain method).

Specifically, the shape of metal particles, the average particle diameter, the particle thickness, the area ratio of metal particles, the distance between neighboring particles, and the complex refractive index are input as parameters for making a simulation model.

The metal particles are randomly arranged in the horizontal plane so as to satisfy the conditions that there are not any other metal particles in a distance less than the distance between the neighboring metal particles. Specifically, when the $n^{th}$ metal particle is placed at a specific coordinate determined from random numbers generated by a calculator, all the distances between the $n^{th}$ metal particle and the $1^{st}$ to $(n-1)^{th}$ metal particles are measured. Then, when all the distances thusly measured are equal to or greater than the distance between the $n^{th}$ metal particle and its neighboring metal particle, the $n^{th}$ metal particle is placed at this specific coordinate. When at least one metal particle is present in a distance less than the distance between the $n^{th}$ metal particle and its neighboring metal particle, this coordinate is not adopted and the $n^{th}$ metal particle is placed at another coordinate newly generated. Through an algorithm of repeating the placement of the metal particle, the metal particle is repeatedly placed until the area ratio is satisfied, to thereby obtain a metal particle model having a random structure.

Regarding the thickness direction of the metal particle-containing layer, the simulation model is made under the conditions that there exist metal particles at the same height in the form of monolayer.

Using the randomly-arranged structure of the metal particles of the above-obtained simulation model, the distance between the centers of each of the metal particles and the metal particle the closest thereto is measured. Here, the "center of the metal particle" is defined as the barycenter position thereof, provided that the density of the metal particle is constant over the horizontal cross-section of the metal particle. The "distance between the centers of the metal particles the closest to each other" means the shortest distance between the centers of the metal particles which is determined by measuring the distances between the centers of all the metal particles. The distance between the centers of the metal particles the closest to each other is measured for all the metal particles, and the average and standard deviation of the distances between the centers of the metal particles the closest to each other are calculated, so that the CV of the distances between the centers of the metal particles can be calculated.

The barycenter position and the distance between the centers of the metal particles can be measured, for example, as follows. Specifically, a SEM image is input to analysis software ImageJ (http://rsbweb-nih.gov/ij/) and then given macro effects.

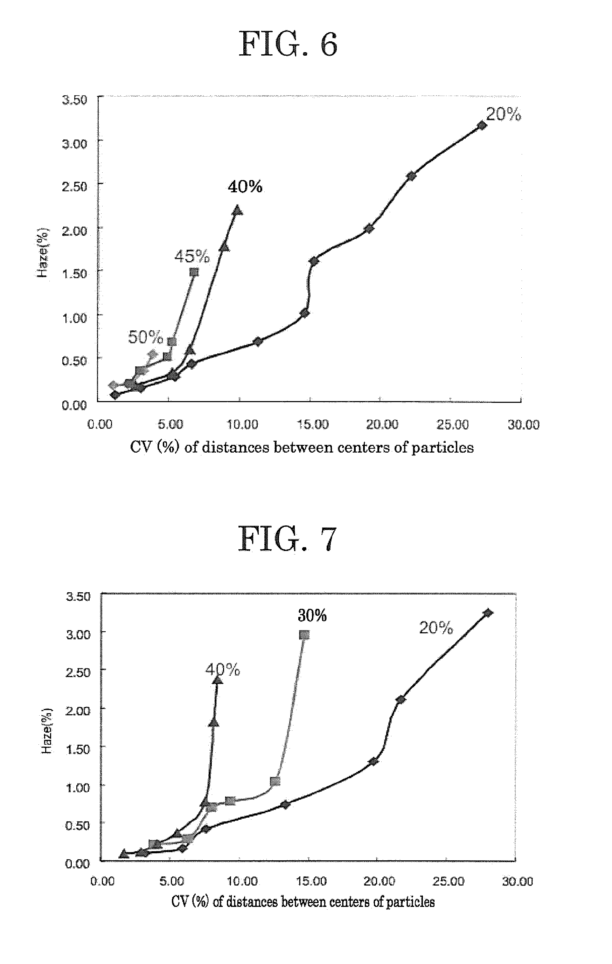

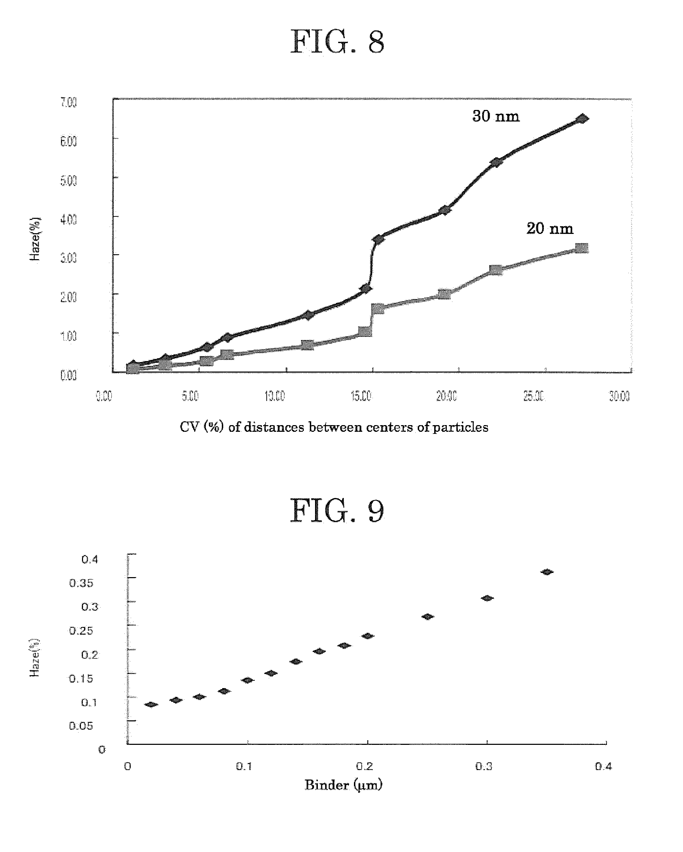

As shown in Figs. 6 and 7, when the area ratio is increased to decrease the CV, the haze can be decreased. As shown in Fig. 8, when the particle thickness and the CV are smaller, the haze can be decreased.

When the CV is small, all the metal particles are uniformly arranged, so that the distance between the centers of the metal particles the closest to each other tends to be large. When the CV is large and the haze is also large, the metal particles are nearly aggregated, so that the distance between the centers of the metal particles the closest to each other becomes small. The value of CV depends on the surface density.

Here, from the viewpoint of reducing haze in the heat-ray shielding material of the present invention, preferably, the area ratio [(B/A) × 100] thereof is 30% or more and the coefficient of variation of the distribution of distances between the centers of neighboring flat metal particles is 11% or less. More preferably, the area ratio [(B/A) × 100] thereof is 40% or more and the coefficient of variation of the distribution of distances between the centers of neighboring flat metal particles is 6.5% or less. Still more preferably, the area ratio [(B/A) × 100] thereof is 45% or more and the coefficient of variation of the distribution of distances between the centers of neighboring flat metal particles is 5% or less. Even more preferably, the area ratio [(B/A) × 100] thereof is 50% or more and the coefficient of variation of the distribution of distances between the centers of neighboring flat metal particles is 3.5% or less.

[Synthesis method for flat metal particles]

The synthesis method for the flat metal particles is not particularly limited and may be appropriately selected depending on the intended purpose so long as it can synthesize substantially hexagonal or disc-shaped flat metal particles. Examples thereof include liquid phase methods such as chemical reduction methods, photochemical reduction methods and electrochemical reduction methods. Furthermore, after hexagonal or triangular flat metal particles have been synthesized, they may be subjected to, for example, an etching treatment using chemical species that dissolve silver (e.g., nitric acid and sodium sulfite) or an aging treatment with heating so as to round the corners of the hexagonal or triangular flat metal particles, whereby substantially hexagonal or disc-shaped flat metal particles may be produced.

In an alternative synthesis method for the flat metal particles, seed crystals are fixed in advance on a surface of a transparent substrate (e.g., a film or a glass) and then are planarily grown to form metal particles (e.g., Ag).

In the heat ray-shielding material of the present invention, the flat metal particles may be subjected to a further treatment in order for the flat metal particles to have desired properties. The further treatment is not particularly limited and may be appropriately selected depending on the intended purpose. Examples thereof include coating of a high-refractive-index material and addition of various additives such as a dispersing agent and an antioxidant.

-High-refractive-index material-

In order to further increase transparency with respect to visible light, the flat metal particles may be coated with a high-refractive-index material having high transparency with respect to visible light so as to form a high-refractive-index shell layer.

The refractive index oaf the high-refractive-index material is preferably 1.6 or higher, more preferably 1.8 or higher, particularly preferably 2.0 or higher. The above refractive index can be measured by, for example, spectroscopic ellipsometry (VASE, product of J. A. Woollam Co., Inc.).

In a medium having a refractive index of about 1.5 such as glass or gelatin, when the refractive index thereof is lower than 1.6, the difference in refractive index between the high-refractive-index material and such a surrounding medium becomes almost zero. As a result, there may be a case where the AR effect or the haze-suppressing effect with respect to visible light for which the high-refractive-index shell layer is provided. Also, there may be a case where the surface density of one layer of flat metal particles cannot be increased since the thickness of the shell has to be larger with decreasing of the difference in refractive index therebetween.

The high-refractive-index material is not particularly limited and may be appropriately selected depending on the intended purpose. Examples thereof include $Al_2O_3$, $TiO_x$, $BaTiO_3$, ZnO, $SnO_2$, $ZrO_2$ and $NbO_x$, where x is an integer of 1 to 3.

The method for coating the high-refractive-index material is not particularly limited and may be appropriately selected depending on the intended purpose. Examples thereof include a method in which a $TiO_x$ layer is formed on flat silver particles by hydrolyzing tetrabutoxytitanium as reported in Langmuir, 2000, Vol. 16, pp. 2731-2735.

When it is difficult to directly form the high-refractive-index material on the flat metal particles, a $SiO_2$ or polymer shell layer may appropriately be formed after the flat metal particles have been synthesized in the above-described manner. In addition, the above metal oxide layer may be formed on the high-refractive-index material. When $TiO_x$ is used as a material for the high-refractive-index metal oxide layer, there is concern that $TiO_x$ degrades a matrix in which flat metal particles are dispersed, since $TiO_x$ exhibits photocatalytic activity. Thus, depending on the intended purpose, a $SiO_2$ layer may appropriately be formed after formation of a $TiO_x$ on each flat metal particle.

-Addition of various additives-

In the heat ray-shielding material of the present invention, an antioxidant (e.g., mercaptotetrazole or ascorbic acid) may be adsorbed onto the flat metal particles so as to prevent oxidation of the metal (e.g., silver) forming the flat metal particles. Also, an oxidation sacrificial layer (e.g., Ni) may be formed on the surfaces of the flat metal particles for preventing oxidation. Furthermore, the flat metal particles may be coated with a metal oxide film (e.g., $SiO_2$ film) for

shielding oxygen.

Also, a dispersing agent may be used for imparting dispersibility to the flat metal particles. Examples of the dispersing agent include high-molecular-weight dispersing agents and low-molecular-weight dispersing agents containing N, S and/or P such as quaternary ammonium salts and amines.

When n is an average refractive index of the surrounding region of the metal particles, the thickness of the metal particle-containing layer is preferably 2,500/(4n) nm or smaller from the viewpoint of increasing resonance reflectance and, from the he viewpoint of reducing the haze with respect to visible light, the thickness of the metal particle-containing layer is more preferably 700/(4n) nm or smaller, particularly preferably 400/(4n) nm or smaller.

When the above thickness is larger than 2,500/(4n) nm, the haze may increase to reduce the amplification effect of the amplitudes of reflected waves due to their phases at the interfaces of the metal particle-containing layer on the upper side and on the lower side of the heat-ray shielding material, so that the reflectance at a resonance wavelength may greatly decrease.

In the metal particle-containing layer closest to a surface of the heat-ray shielding material through which solar radiation enters, the reflectance, at a plasmon resonance peak wavelength is preferably 30% or higher, more preferably 40% or higher, particularly preferably 50% or higher.

When the above reflectance is lower than 30%, shielding effects with respect to infrared rays cannot sufficiently be obtained in some cases.

The reflectance can be measured with, for example, a UV-Vis near-infrared spectrophotometer (product of JASCO Corporation, V-670).

Regarding the reflectance of each metal particle-containing layer, preferably, the metal particle-containing layer closest to the surface of the heat-ray shielding material through which solar radiation enters has the highest reflectance and the metal particle-containing layer farthest from the surface of the heat-ray shielding material through which solar radiation enters has the lowest reflectance, with the reflectances of the intermediate metal particle-containing layers become sequentially lower from the metal particle-containing layer having the highest reflectance to the metal particle-containing layer having the lowest reflectance. This configuration is advantageous in that it is possible to increase the reflectance of the combined metal particle-containing layers with respect to infrared rays.

Regarding the transmittance of the metal particle-containing layer, the minimum value of the transmittance appears preferably within a wavelength range of 600 nm to 2,500 nm, more preferably 700 nm to 2,000 nm, particularly preferably 780 nm to 1,800 nm.

When the wavelength at which the minimum value of the transmittance appears is shorter than 600 nm, visible light is shielded to darken or color the metal particle-containing layer. When it is longer than 2,500 nm, sunlight components are contained in a small quantity and sufficient shielding effects cannot be obtained in some cases.

<Substrate>

The substrate is not particularly limited, so long as it is optically transparent, and may be appropriately selected depending on the intended purpose. For example, the substrate is a substrate having a visible light transmittance of 70% or higher, preferably 80% or higher, or a substrate having a high transmittance with respect to lights of the near-infrared region.

The material for the substrate is not particularly limited and may be appropriately selected depending on the intended purpose. Examples thereof include glass materials (e.g., a white glass plate and a blue glass plate), polyethylene terephthalate (PET) and triacetylcellulose (TAC).

<Other members>

-Protective layer-

The heat ray-shielding material of the present invention preferably contains a protective layer for improving the adhesion to the substrate and mechanically protecting the resultant product.

The protective layer is not particularly limited and may be appropriately selected depending on the intended purpose. The protective layer contains, for example, a binder, a surfactant and a viscosity adjuster; and, if necessary, further contains other ingredients.

--Binder--

The binder is not particularly limited and may be appropriately selected depending on the intended purpose. The binder preferably has higher transparency with respect to visible light and sunlight. Examples thereof include acrylic resins, polyvinylbutyrals and polyvinylalcohols. Notably, when the binder absorbs heat rays, the reflection effects of the flat metal particles are disadvantageously weakened. Thus, when an intermediate layer is formed between the heat ray source and the flat metal particles, preferably, a material having no absorption of light having a wavelength of 780 nm to 1,500 nm is selected or the thickness of the protective layer is made small.

The refractive index of the binder is preferably 1.0 to 10.0, more preferably 1.05 to 5.0, particularly preferably 1.1 to 4.0.

When the refractive index thereof is less than 1.1, it may be difficult to form the binder into a uniform thin film. When it is higher than 10.0, the thickness has to be about 10 nm, potentially making it difficult to form a uniform film.

Preferably, the binder does not absorb light having a wavelength falling within the range of 400 nm to 700 nm. More preferably, it does not absorb light having a wavelength falling within the range of 380 nm to 2,500 nm.

When the binder absorbs light having a wavelength falling within the range of 400 nm to 700 nm, it absorbs visible light to adversely affect the color tone and visible light transmittance in some cases. When the binder absorbs light having a wavelength falling within the range of 380 nm to 2,500 nm, heat shielding is performed by absorption instead of reflection, potentially reducing heat shielding effects.

The visible light ray reflectance of the heat-ray shielding material of the present invention is preferably 15% or lower, more preferably 10% or lower, particularly preferably 8% or lower, in a state where the binder is sandwiched between the glass substrate and the protective layer.

When the visible light ray reflectance is higher than 15%, glare of reflected light may be much more considerable than that of a glass plate.

The visible light ray reflectance can be measured according to the method of JIS-R3106: 1998 "Testing method on transmittance, reflectance and emittance of flat glasses and evaluation of solar heat gain coefficient."

The visible light ray transmittance of the heat-ray shielding material of the present invention is preferably 60% or higher, more preferably 65% or higher, particularly preferably 70% or higher.

When the visible light ray transmittance is lower than 60%, there may be a case where the outside may be hard to see when the heat-ray shielding material is used as, for example, automotive glass or building glass.

The visible light ray transmittance can be measured according to, for example, the method of JIS-R3106: 1998 "Testing method on transmittance, reflectance and emittance of flat glasses and evaluation of solar heat gain coefficient."

The haze of the heat-ray shielding material of the present invention is preferably 20% or lower, more preferably 5% or lower, particularly preferably 2% or lower.

When the haze is higher than 20%, there may be a case where when the heat-ray shielding material is used as, for example, automotive glass or building glass, the outside may be hard to see, which is not preferred in terms of safety.

The haze can be measured according to, for example, the method of JIS K7136 and JIS K7361-1.

The solar heat gain coefficient of the heat-ray shielding material of the present invention is preferably 70% or lower, more preferably 50% or lower, particularly preferably 40% or lower.

When the solar heat gain coefficient is higher than 70%, the effect of shielding heat is poor and heat shielding property is not sufficient in some cases.

The solar heat gain coefficient can be measured according to, for example, the method of JIS-R3106: 1998 "Testing method on transmittance, reflectance and emittance of flat glasses and evaluation of solar heat gain coefficient."

[Method for producing the heat-ray shielding material]

The method for producing the heat ray-shielding material of the present invention is not particularly limited and may be appropriately selected depending on the intended purpose. In one employable method, a substrate is coated with a dispersion liquid containing the metal particles using, for example, a dip coater, a die coater, a slit coater, a bar coater or a gravure coater. In another employable method, the flat metal particles are plane-oriented by, for example, an LB film method, a self-organizing method and spray coating.

Also, a method utilizing electrostatic interactions may be applied to plane orientation in order to increase adsorbability or plane orientability of the metal particles on the substrate surface. Specifically, when the surfaces of the metal particles are negatively charged (for example, when the metal particles are dispersed in a negatively chargeable medium such as citric acid), the substrate surface is positively charged (for example, the substrate surface is modified with, for example, an amino group) to electrostatically enhance plane orientability. Also, when the surfaces of the metal particles are hydrophilic, the substrate surface may be provided with a sea-island structure having hydrophilic and hydrophobic regions using, for example, a block copolymer or a micro contact stamp, to thereby control the plane orientability and the interparticle distance of the flat metal particles utilizing hydrophilic-hydrophobic interactions.

Notably, the coated metal particles are allowed to pass through pressure rollers (e.g., calender rollers or rami rollers) to promote their plane orientation.

[Usage form of the heat-ray shielding material]

The usage form of the heat ray-shielding material of the present invention is not particularly limited and may be appropriately selected depending on the intended purpose so long as it is used for selectively reflecting or absorbing heat rays (near-infrared rays). Examples thereof include vehicles' glass or films, building glass or films and agricultural films. Among them, the heat ray-shielding material is preferably used as vehicles' glass or films and building glass or films in terms of energy saving.

Notably, in the present invention, heat rays (near-infrared rays) refer to near-infrared rays (780 nm to 2,500 nm) accounting for about 50% of sunlight.

The method for producing the glass is not particularly limited and may be appropriately selected depending on the intended purpose. In one employable method, the heat ray-shielding material produced in the above-described manner is provided with an adhesive layer, and the resultant laminate is attached onto vehicle's glass (e.g., automotive glass) or building glass or is inserted together with a PVB or EVA intermediate film used in laminated glass. Alternatively, only particle/binder layer may be transferred onto a PVB or EVA intermediate film; i.e., the substrate may be peeled off in use.

Examples

The present invention will next be described by way of Examples, which should not be construed as limiting the present invention thereto.

(Example 1)

<Production of heat-ray shielding materials>

-Synthesis of flat metal particles-

A 0.5 g/L aqueous polystyrenesulfonic acid solution (2.5 mL) was added to a 2.5 mM aqueous sodium citrate solution (50 mL), followed by heating to 35°C. Then, a 10 mM sodium borohydride solution (3 mL) was added to the resultant solution. Next, a 0.5 mM aqueous silver nitrate solution (50 mL) was added thereto at 20 mL/min under stirring. This solution was stirred for 30 min to prepare a seed particle solution.

Next, ion-exchanged water (87.1 mL) was added to a 2.5 mM aqueous sodium citrate solution (132.7 mL), followed by heating to 35°C. Subsequently, a 10 mM aqueous ascorbic acid solution (2 mL) was added to the resultant solution and then 42.4 mL of the above-prepared seed particle solution was added thereto. Furthermore, a 0.5 mM aqueous silver nitrate solution (79.6 mL) was added thereto at 10 mL/min under stirring. Next, the above-obtained solution was stirred for 30 min, and then a 0.35 M aqueous potassium hydroquinonesulfonate solution (71.1 mL) was added thereto. Furthermore, 200 g of a 7% aqueous gelatin solution was added thereto. Separately, 0.25 M aqueous sodium sulfite solution (107 mL) and a 0.47 M aqueous silver nitrate solution (107 mL) were mixed together to prepare a mixture containing white precipitates. The thus-prepared mixture was added to the solution to which the aqueous gelatin solution had been added. Immediately after the addition of the mixture containing white precipitates, a 0.17 M aqueous NaOH solution (72 mL) was added to the resultant mixture. Here, the aqueous NaOH solution was added thereto at an addition rate adjusted so that the pH of the mixture did not exceed 10. The thus-obtained mixture was stirred for 300 min to prepare a dispersion liquid of flat silver particles.

It was confirmed that this dispersion liquid of flat silver particles contained hexagonal flat particles of silver having an average circle-equivalent diameter of 200 nm (hereinafter referred to as "hexagonal flat silver particles"). Also, when the thicknesses of the hexagonal flat silver particles were measured with an atomic force microscope (AFM) (Nanocute II, product of Seiko Instruments Inc.), the average thickness thereof was found to be 20 nm, and it was found that the formed hexagonal flat silver particles had an aspect ratio of 10.0.

-Formation of a metal particle-containing layer-

First, 1 M NaOH (1.00 mL) and ion-exchanged water (24 mL) were added to the above-prepared dispersion liquid of flat silver particles (16 mL), followed by centrifuging with a centrifuge (product of KOKUSAN Co., Ltd., H-200N, ANGLE ROTOR BN) at 5,000 rpm for 5 min, to thereby precipitate hexagonal flat silver particles. The supernatant after the centrifugation was removed and then water (19 mL) was added thereto to re-disperse the precipitated hexagonal flat silver particles. Thereafter, 1.6 mL of a 2% aqueous methanol solution (water: methanol = 1:1 (by mass)) was added to the resultant dispersion liquid to thereby prepare a coating liquid. The thus-prepared coating liquid was coated onto a PET film with a wire coating bar No. 14 (product of R.D.S Webster N.Y. Co.), followed by drying, to thereby obtain a film on which hexagonal flat silver particles were fixed.

A carbon thin film was formed by vapor deposition on the obtained PET film so as to have a thickness of 20 nm. When the resultant film was observed under a SEM (product of Hitachi Ltd., FE-SEM, S-4300, 2 kV, × 20,000), the hexagonal flat silver particles were fixed on the PET film without aggregation.

Thereafter, the surface of the PET film substrate on which the hexagonal flat silver particles had been fixed was coated with a 1% by mass solution of polyvinyl butyral (PVB) (product of Wako Pure Chemical Industries, Ltd., average degree of polymerization: 700) in toluene-acetone (toluene : acetone =1:1 (by mass)) using a wire coating bar No. 30, followed by drying, to thereby form a protective layer having a thickness of 1 $\mu$m (1,000 nm). Through the above procedure, a heat-ray shielding material of Example 1 was produced.

(Examples 2 to 29 and Comparative Examples 1 to 6)

<Production of heat-ray shielding material>

Flat metal particles and heat-ray shielding materials of Examples 2 to 29 and Comparative Examples 1 to 6 were produced in the same manner as in Example 1 except that the amounts of the 1 M NaOH and water, and the number and time of rotation of the centrifuge (product of KOKUSAN Co., Ltd., H-200N, ANGLE ROTOR BN) were changed as shown in Tables 1-1-2 and 1-2-2.

(Examples 30 to 47)

<Production of heat-ray shielding material>

Flat metal particles and heat-ray shielding materials of Examples 30 to 47 were produced in the same manner as in Example 1 except that the amount of the 2.5 mM aqueous sodium citrate solution was changed from 132.7 mL to 255.2 mL, that the amount of the ion-exchanged water was changed from 87.1 mL to 127.6 mL, that 72 mL of the 0.17 M aqueous NaOH solution was changed to 72 mL of 0.08 M aqueous NaOH solution, and that the amounts of 1 M NaOH and water, and the number and time of rotation of the centrifuge (product of KOKUSAN Co., Ltd., H-200N, ANGLE ROTOR BN) were changed as shown in Table 1-2-2.

(Examples 48 to 55)

<Production of heat-ray shielding material>

Flat metal particles and heat-ray shielding materials of Examples 48 to 55 were produced in the same manner as in Example 1 except that 72 mL of the 0.17 M aqueous NaOH solution, which had been added after the addition of the mixture containing white precipitates to the 2.5 mM aqueous sodium citrate solution, was changed to 72 mL of the 0.83 M aqueous NaOH solution and that the amounts of the 1 M NaOH and water, and the number and time of rotation of the centrifuge (product of KOKUSAN Co., Ltd., H-200N, ANGLE ROTOR BN) were changed as shown in Table 1-2-2.

(Examples 56 to 66)

<Production of heat-ray shielding material>

Flat metal particles and heat-ray shielding materials of Examples 56 to 66 were produced in the same manner as in Example 1 except that that the amounts of the 1 M NaOH and water, and the number and time of rotation of the centrifuge (product of KOKUSAN Co., Ltd., H-200N, ANGLE ROTOR BN) were changed as shown in Table 1-3-2.

(Example 67)

<Production of heat-ray shielding material>

Flat metal particles and a heat-ray shielding material of Example 67 were produced in the same manner as in Example 1 except that dilute nitric acid was added to the dispersion liquid of flat silver particles and the resultant mixture was subjected to an aging treatment of heating at 80°C for 1 hour. As a result of observing the particles having been subjected to the aging treatment under a TEM, it was confirmed that the corners of the hexagons were rounded to change into substantially disc shapes.

(Examples 68 to 74)

<Production of heat-ray shielding material>

Flat metal particles and heat-ray shielding materials of Examples 68 to 74 were produced in the same manner as in Example 67 except that that the amounts of the 1 M NaOH and water, and the number and time of rotation of the centrifuge (product of KOKUSAN Co., Ltd., H-200N, ANGLE ROTOR BN) were changed as shown in Table 1-4-2.

(Example 75)

<Production of heat-ray shielding material>

Flat metal particles and a heat-ray shielding material of Example 75 were produced in the same manner as in Example 1 except that the hexagonal flat silver particles in the metal particle-containing layer were coated in the below-described manner with a high-refractive-index material $TiO_2$ to form $TiO_2$ shells. Notably, when the refractive index of $TiO_2$ was measured by spectroscopic ellipsometry (VASE, product of J. A. Woollam Co., Inc.), it was found to be 2.2.

-Formation of $TiO_2$ shells-

$TriO_2$ shells were formed referring to literature (Langmuir, 2000, Vol. 16, pp. 2731-2735). Specifically, 2 mL of tetraethoxytitanium, 2.5 mL of acetylacetone and 0.1 mL of dimethylamine were added to the dispersion liquid of hexagonal flat silver particles, followed by stirring for 5 hours, to thereby obtain hexagonal flat silver particles coated with $TiO_2$ shells. When the cross-sections of the hexagonal flat silver particles were observed under a SEM, the $TiO_2$ shells were found to have a thickness of 30 nm.

(Examples 76 and 77)

<Production of heat-ray shielding material>

Flat metal particles and heat-ray shielding materials of Examples 76 and 77 were produced in the same manner as in Example 75 except that that the amounts of the 1 M NaOH and water, and the number and time of rotation of the centrifuge (product of KOKUSAN Co., Ltd., H-200N, ANGLE ROTOR BN) were changed as shown in Table 1-5-2.

(Evaluation)

Next, the obtained metal particles and heat-ray shielding materials were evaluated for properties in the following manner. The results are shown in Tables 1-1-1, 1-2-1, 1-3-1, 1-4-1 and 1-5-1 and 2-1 to 2-5.

<Measurement of area ratio>

Each of the obtained heat ray-shielding materials was observed under a scanning electron microscope (SEM). The obtained SEM image was binarized to determine an area ratio of [(B/A) x 100], where A and B denote respectively an area of the substrate and the total value of areas of the flat metal particles when the heat ray-shielding material was viewed from above of the heat ray-shielding material.

<Rate of flat metal particles, average circle-equivalent diameter and coefficient of variation of average circle-equivalent diameter>

Uniformity in shape of the flat silver particles was determined as follows. Specifically, 200 particles were randomly selected from the SEM image observed. Then, image processing was performed on their shapes, with A and B corresponding respectively to substantially hexagonal or disc-shaped particles and indefinite particles (e.g., drop-shaped particles). Subsequently, the rate by number of the particles corresponding to A (% by number) was calculated.
Similarly, 100 particles corresponding to A were measured for particle diameter with a digital caliper. The average value of the particle diameters was defined as an average circle-equivalent diameter. Moreover, the standard deviation of the circle-equivalent diameters was divided by the average circle-equivalent diameter to obtain coefficient of variation (%).

-Average thickness-

The dispersion liquid containing the flat metal particles was dropped on a glass substrate, followed by drying. Then, the thickness of each flat metal particle was measured with an atomic force microscope (AFM) (Nanocute II, product of Seiko Instruments Inc.). Notably, the measurement conditions of AFM were as follows: self-detection sensor, DFM mode, measurement range: 5 $\mu$m, scanning speed: 180 sec/frame and the number of data: 256 x 256.

-Aspect ratio-

The average circle-equivalent diameter was divided by the average thickness of the particles to obtain an aspect ratio of the obtained flat metal particles.

<Distance between the centers of the metal particles the closest to each other>

A SEM image of the obtained heat-ray shielding material was input to analysis software ImageJ and given macro effects for analyzing the metal particles. After binarization, the profile of each metal particle was detected, and the barycenter coordinate thereof was determined provided that the metal particles have the same thickness. The distance between the barycenter coordinates was measured for all the metal particles, and the minimum value of the distances between the barycenter coordinates thereof was determined as the distance between the centers of the metal particles the closest to each other.

<Coefficient of variation (CV) of the distribution of distances between the centers of neighboring flat metal particles (Examples 1 to 55 and Comparative Examples 1 to 6)>

-Modeling of flat metal particles arranged in monolayer-

The shape of the flat metal particles, the particle diameter, the average particle thickness, the area ratio of the population of the flat metal particles, and the distance between the neighboring metal particles the closest to each other were input as parameters for making a simulation model. The particle diameter was defined as the diameter of the circumcircle of a regular hexagon.

The flat metal particles were randomly arranged in a horizontal plane so as to satisfy the conditions that there are not any other flat metal particles in a distance less than the distance between the neighboring flat metal particles the closest to each other. Specifically, when the $n^{th}$ flat metal particle was placed at a specific coordinate determined from random numbers generated by a calculator, all the distances between the $n^{th}$ flat metal particle and the 1st to (n-1)$^{th}$ flat metal particles were measured. Then, when all the distances thusly measured were equal to or greater than the distance between the $n^{th}$ flat metal particle and the neighboring flat metal particle the closest thereto (i.e., the distance between the neighboring flat metal particles the closest to each other), the $n^{th}$ flat metal particle was placed at this specific coordinate. When at least one metal particle was present in a distance less than the distance between the neighboring metal particles the closest to each other, this coordinate was not adopted and the $n^{th}$ flat metal particle was placed at another coordinate newly generated. Through an algorithm of repeating the placement of the flat metal particle, the flat metal particle was repeatedly placed until the area ratio was satisfied, to thereby obtain a flat metal particle model having a random structure.

Regarding the thickness direction (vertical direction) of the metal particle-containing layer, the simulation model was made under the conditions that there existed flat metal particles in the form of monolayer in the thickness direction.

-Simulation by the FDTD method-

Using the randomly-arranged structure of the flat metal particles of the above-obtained simulation model, the spectrometric spectra were calculated by the electromagnetic field optical simulation FDTD method, to thereby calculate the distance between the flat metal particles the closest to each other for all the flat metal particles. The average and standard deviation of the thus-calculated distances between the centers of the flat metal particles the closest to each other were calculated, so that the CV was calculated from (standard deviation of distances between the centers of particles the closest to each other)/(average of distances between the centers of particles the closest to each other) x 100 (%).

The above-obtained simulation model was subjected to the electromagnetic field optical simulation FDTD method to calculate spectrometric spectra. The complex refractive indices as spectral characteristics of the flat metal particles and the surrounding medium were input as input parameters to the model. The complex refractive index of the flat metal particles used was the complex refractive index described in literature (P. Winsemius et. al., J. Phys. F6, 1583 (1976)). Regarding the surrounding medium, the following setting was employed: n = 1.50 and k = 0.00. The spectrometric spectrum of the metal particle-containing layer was measured by the FDTD method at a wavelength range of 300 nm to 2,500 nm so as to correspond to the sunlight spectrum. The obtained spectrometric spectrum was used to determine the peak wavelength of reflectance. Notably, the peak wavelength of reflectance was defined as a wavelength at which the reflectance is highest of those at all the wavelengths.

Fig. 5 is a part of a horizontal cross-section of the population of the flat metal particles having a particle diameter of 200 nm, an average particle thickness of 20 nm, a regular hexagonal shape, an area ratio of 20%, and a CV of the distance between the centers of the particles the closest to each other of 6.67%.

<Haze>

The spectrometric spectrum obtained through simulation by the FDTD method was used to calculate a ratio of the quantity of scattered transmitted light to the total quantity of transmitted light at each wavelength from the following formula.

Based on the following formula, the haze was measured according to JIS-K7136 and JIS-K7361-1.

$$\{((\text{Quantity of light transmitted to air}) - (\text{Quantity of light linearly transmitted to air})) / (\text{Quantity of light transmitted to air}) \times 100\} \ (\%)$$

<Coefficient of variation (CV) of the distribution of distances between the centers of neighboring flat metal particles (Examples 56 to 66)>

-Modeling of dispersion of silver particles in binder (for comparison with the monolayer model)-

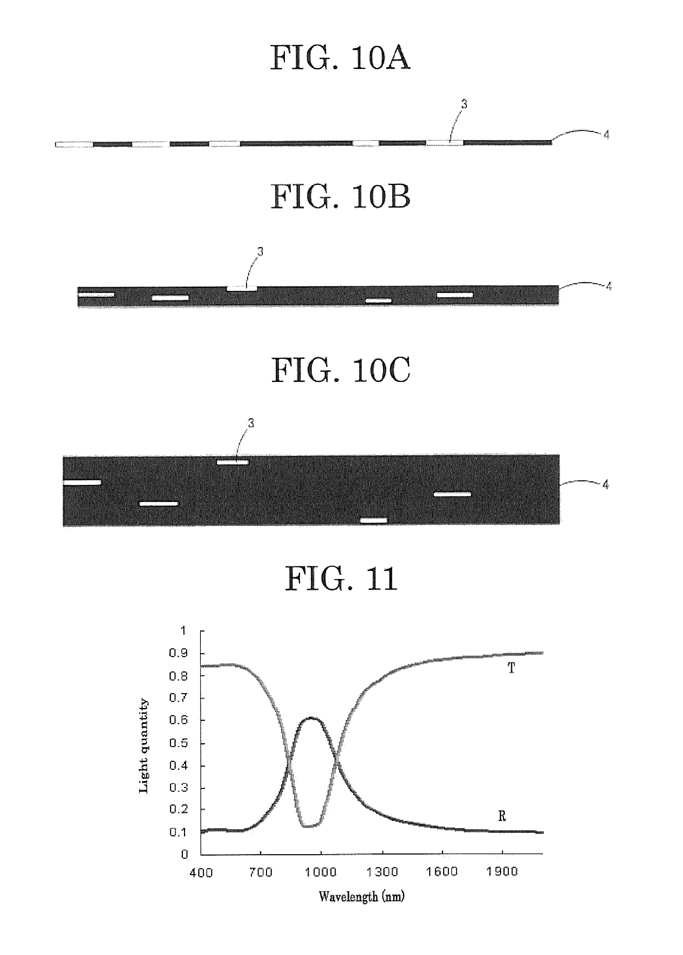

While keeping the positions of the silver particles unchanged in the horizontal plane in Example 1, the silver particles were randomly arranged in a certain range of height in the thickness direction of the metal particle-containing layer, to thereby study the influence by the distribution of the silver particles in the thickness direction of the metal particle-containing layer. Simulation models were made in the same manner as in Example 1 except that the range of height where the silver particles were present was set to the thickness of the binder. Fig. 10A is a cross-sectional view of the simulation model where the binder thickness is 0.02 $\mu$m, Fig. 10B is a cross-sectional view of the simulation model where binder thickness is 0.10 $\mu$m and Fig. 10C is a cross-sectional view of the simulation model where binder thickness is 0.35 $\mu$m. The larger the binder thickness is, the broader the region where the flat silver particles can exist is.

In order to evaluate the positions of the flat silver particles, the positions of the silver particles in the horizontal plane only were taken into consideration while the positions thereof in the height direction were not taken into consideration. Based on the two-dimensional positions of particles, the distances between the centers of the flat metal particles and the CV thereof were determined.

-Visible light transmission spectrum and heat ray reflection spectrum-

The obtained heat ray-shielding material was measured for transmission spectrum and reflection spectrum according to JIS which is evaluation standard for automotive glass.

The transmission and reflection spectra were evaluated with a UV-Vis near-infrared spectrophotometer (product of JASCO Corporation, V-670). The evaluation was performed using an absolute reflectance measurement unit (ARV-474, product of JASCO Corporation). Here, incident light was caused to pass through a 45° polarization plate so as to become substantially non-polarized light.

Fig. 11 shows spectra of the heat ray-shielding material of Example 1 where the reflection by the surface of the substrate was not included and only the metal particle-containing layer was measured.

-Solar heat gain coefficient, visible light ray transmittance and visible light ray reflectance-

The solar heat gain coefficient, visible light ray transmittance and visible light ray reflectance were measured from 300 nm to 2,100 nm according to the method of JIS-R3106: 1998 "Testing method on transmittance, reflectance and emittance of flat glasses and evaluation of solar heat gain coefficient." According to JIS-R3106, the measurements were used to calculate the solar heat gain coefficient, visible light ray transmittance and visible light ray reflectance. This measurement was performed in a state where the heat-ray shielding material was placed so that the metal particle-containing layer was the closest to the side of incident light.

Also, the maximum reflection value was obtained from the optical reflection spectrum obtained from the above-obtained measurements, to thereby determine the wavelength at which the maximum reflection value was observed. In addition, the reflectance at this wavelength was defined as the maximum reflectance (peak reflectance).

<Transmittance with respect to radio waves>

The surface resistance ($\Omega$/square) of the heat ray-shielding material obtained in the above-described manner was measured using a surface resistance measurement device (RORESTER, product of Mitsubishi Chemical Analytech Co. Ltd.). The thus-measured surface resistance was used as an index of transmittance with respect to radio waves.

<Wavelength at which the minimum transmittance of the metal particle-containing layer appears>

When the transmittance spectrum is described, the minimum value of the transmittance appears in the downward convex. The wavelength at which the minimum value of the transmittance appears in the downward convex was defined as the wavelength at which the minimum transmittance of the metal particle-containing layer appears.

<Relationship among area ratio, haze and CV>

Using each of the heat-ray shielding materials produced in Examples 1, 18, 23 and 28, a change in haze was measured when the CV was changed. The results are shown in Fig. 6.
The heat-ray shielding materials of Examples 32, 39 and 45 were subjected to the same measurement. The results are shown in Fig. 7.
As is clear from Figs. 6 and 7, when the area ratio is small, the haze tends to increase with increasing of the CV.

<Relationship among average particle thickness, haze and CV>

Using each of the heat-ray shielding materials produced in Examples 1 and 52, a change in haze was measured when the CV was changed. The results are shown in Fig. 8.
As is clear from Fig. 8, when the average particle thickness is large, the haze tends to increase with increasing of the CV.

<Relationship between binder thickness and haze>

In Example 1, a change in haze was measured with changing the binder thickness. The results are shown in Fig. 9.
As is clear from Fig. 9, the gradient of the haze changes when the binder thickness is in ranges of 0.02 $\mu$m to 0.08 $\mu$m and 0.10 $\mu$m or greater, indicating that the haze increases with increasing of the binder thickness.
This is likely because the range where the silver particles existed exceeded (wavelength)/4/(surrounding refractive index) with respect to visible light. At 555 nm which is the maximum value of luminosity factor for visible light, the (wavelength)/4/(surrounding refractive index) is 92.5 nm. The (wavelength)/4/(surrounding refractive index) is where linearly transmitted light intensifies together through interactions between the particles. When the binder thickness exceeds this distance, probably, scattering through interactions is not weakened very much as well as linearly transmitted light disappears as a result of interactions thereof, leading to an increase in haze.

Table 1-1-1

| | | Flat metal particles | | | | | | |
|---|---|---|---|---|---|---|---|---|
| | | Avg. circle-eq. diameter (nm) | Avg. thickness (nm) | CV of avg. circle-eq. diameters | Rate of particles (%) | Aspect ratio | Shape of particles | Distance between centers (nm) | Area ratio (%) |
| | Ex. 1 | 200 | 20 | 8% | 92 | 10 | Regular hexagonal | 357 | 20 |
| | Ex. 2 | 200 | 20 | 8% | 92 | 10 | Regular hexagonal | 338 | 20 |

(continued)

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of particles (%) | Aspect ratio | Shape of particles | Distance between centers (nm) | Area ratio (%) |
| Ex. 3 | 200 | 20 | 8% | 92 | 10 | Regular hexagonal | 326 | 20 |
| Ex. 4 | 200 | 20 | 8% | 92 | 10 | Regular hexagonal | 311 | 20 |
| Ex. 5 | 200 | 20 | 8% | 92 | 10 | Regular hexagonal | 293 | 20 |
| Ex. 6 | 200 | 20 | 8% | 92 | 10 | Regular hexagonal | 272 | 20 |
| Ex. 7 | 200 | 20 | 8% | 92 | 10 | Regular hexagonal | 251 | 20 |
| Ex. 8 | 200 | 20 | 8% | 92 | 10 | Regular hexagonal | 245 | 20 |
| Ex. 9 | 200 | 20 | 8% | 92 | 10 | Regular hexagonal | 303 | 30 |
| Ex. 10 | 200 | 20 | 8% | 92 | 10 | Regular hexagonal | 276 | 30 |
| Ex. 11 | 200 | 20 | 8% | 92 | 10 | Regular hexagonal | 261 | 30 |
| Ex. 12 | 200 | 20 | 8% | 92 | 10 | Regular hexagonal | 249 | 30 |
| Ex. 13 | 200 | 20 | 8% | 92 | 10 | Regular hexagonal | 237 | 30 |
| Ex. 14 | 200 | 20 | 8% | 92 | 10 | Regular hexagonal | 222 | 30 |
| Ex. 15 | 200 | 20 | 8% | 92 | 10 | Regular hexagonal | 220 | 30 |
| Ex. 16 | 200 | 20 | 8% | 92 | 10 | Regular hexagonal | 250 | 40 |
| Ex. 17 | 200 | 20 | 8% | 92 | 10 | Regular hexagonal | 235 | 40 |
| Ex. 18 | 200 | 20 | 8% | 92 | 10 | Regular hexagonal | 227 | 40 |
| Ex. 19 | 200 | 20 | 8% | 92 | 10 | Regular hexagonal | 214 | 40 |
| Ex. 20 | 200 | 20 | 8% | 92 | 10 | Regular hexagonal | 212 | 40 |
| Ex. 21 | 200 | 20 | 8% | 92 | 10 | Regular hexagonal | 238 | 45 |
| Ex. 22 | 200 | 20 | 8% | 92 | 10 | Regular hexagonal | 229 | 45 |

(continued)

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of particles (%) | Aspect ratio | Shape of particles | Distance between centers (nm) | Area ratio (%) |
| Ex. 23 | 200 | 20 | 8% | 92 | 10 | Regular hexagonal | 225 | 45 |
| Ex. 24 | 200 | 20 | 8% | 92 | 10 | Regular hexagonal | 216 | 45 |
| Ex. 25 | 200 | 20 | 8% | 92 | 10 | Regular hexagonal | 211 | 45 |
| Ex. 26 | 200 | 20 | 8% | 92 | 10 | Regular hexagonal | 233 | 50 |
| Ex. 27 | 200 | 20 | 8% | 92 | 10 | Regular hexagonal | 227 | 50 |
| Ex. 28 | 200 | 20 | 8% | 92 | 10 | Regular hexagonal | 220 | 50 |
| Ex. 29 | 200 | 20 | 8% | 92 | 10 | Regular hexagonal | 212 | 50 |

Table 1-1-2

| | Formation of metal particle-containing layer | | | |
|---|---|---|---|---|
| | Amount of water (mL) | Amount of NaOH (mL) | Rotation number (rpm) | Rotation time (min) |
| Ex. 1 | 19 | 1 | 5000 | 5 |
| Ex. 2 | 19 | 0.91 | 5000 | 5 |
| Ex. 3 | 19 | 0.8 | 5000 | 5 |
| Ex. 4 | 19 | 0.7 | 5000 | 5 |
| Ex. 5 | 19 | 0.6 | 5000 | 5 |
| Ex. 6 | 19 | 0.51 | 5000 | 5 |
| Ex. 7 | 19 | 0.42 | 5000 | 5 |
| Ex. 8 | 19 | 0.34 | 5000 | 5 |
| Ex. 9 | 11 | 1 | 5000 | 5 |
| Ex. 10 | 11 | 0.88 | 5000 | 5 |
| Ex. 11 | 11 | 0.75 | 5000 | 5 |
| Ex. 12 | 11 | 0.63 | 5000 | 5 |
| Ex. 13 | 11 | 0.51 | 5000 | 5 |
| Ex. 14 | 11 | 0.33 | 5000 | 5 |
| Ex. 15 | 11 | 0.25 | 5000 | 5 |
| Ex. 16 | 6 | 1 | 5000 | 5 |
| Ex. 17 | 6 | 0.8 | 5000 | 5 |
| Ex. 18 | 6 | 0.65 | 5000 | 5 |
| Ex. 19 | 6 | 0.45 | 5000 | 5 |

(continued)

| | Formation of metal particle-containing layer | | | |
|---|---|---|---|---|
| | Amount of water (mL) | Amount of NaOH (mL) | Rotation number (rpm) | Rotation time (min) |
| Ex. 20 | 6 | 0.25 | 5000 | 5 |
| Ex. 21 | 5 | 1 | 5000 | 5 |
| Ex. 22 | 5 | 0.8 | 5000 | 5 |
| Ex. 3 | 5 | 0.65 | 5000 | 5 |
| Ex. 24 | 5 | 0.45 | 5000 | 5 |
| Ex. 25 | 5 | 0.25 | 5000 | 5 |
| Ex. 26 | 4 | 1 | 5000 | 5 |
| Ex. 27 | 4 | 0.75 | 5000 | 5 |
| Ex. 28 | 4 | 0.5 | 5000 | 5 |
| Ex. 29 | 4 | 0.25 | 5000 | 5 |

Table 1-2-1

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of Rate of particles (%) | Aspect ratio | Shape of particles | Distance between centers (nm) | Area ratio (%) |
| Ex. 30 | 150 | 20 | 10% | 91 | 7.5 | Regular hexagonal | 262 | 20 |
| Ex.31 | 150 | 20 | 10% | 91 | 7.5 | Regular hexagonal | 250 | 20 |
| Ex. 32 | 150 | 20 | 10% | 91 | 7.5 | Regular hexagonal | 226 | 20 |
| Ex. 33 | 150 | 20 | 10% | 91 | 7.5 | Regular hexagonal | 212 | 20 |
| Ex. 34 | 150 | 20 | 10% | 91 | 7.5 | Regular hexagonal | 196 | 20 |
| Ex. 35 | 150 | 20 | 10% | 91 | 7.5 | Regular hexagonal | 209 | 30 |
| Ex. 36 | 150 | 20 | 10% | 91 | 7.5 | Regular hexagonal | 197 | 30 |
| Ex.37 | 150 | 20 | 10% | 91 | 7.5 | Regular hexagonal | 185 | 30 |
| Ex. 38 | 150 | 20 | 10% | 91 | 7.5 | Regular hexagonal | 177 | 30 |
| Ex. 39 | 150 | 20 | 10% | 91 | 7.5 | Regular hexagonal | 173 | 30 |
| Ex. 40 | 150 | 20 | 10% | 91 | 7.5 | Regular hexagonal | 163 | 30 |
| Ex. 41 | 150 | 20 | 10% | 91 | 7.5 | Regular hexagonal | 194 | 40 |

(continued)

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of Rate of particles (%) | Aspect ratio | Shape of particles | Distance between centers (nm) | Area ratio (%) |
| Ex. 42 | 150 | 20 | 10% | 91 | 7.5 | Regular hexagonal | 187 | 40 |
| Ex. 43 | 150 | 20 | 10% | 91 | 7.5 | Regular hexagonal | 179 | 40 |
| Ex. 44 | 150 | 20 | 10% | 91 | 7.5 | Regular hexagonal | 173 | 40 |
| Ex. 45 | 150 | 20 | 10% | 91 | 7.5 | Regular hexagonal | 163 | 40 |
| Ex. 46 | 150 | 20 | 10% | 91 | 7.5 | Regular hexagonal | 157 | 40 |
| Ex. 47 | 150 | 20 | 10% | 91 | 7.5 | Regular hexagonal | 155 | 40 |
| Ex. 48 | 200 | 30 | 9% | 92 | 6.7 | Regular hexagonal | 357 | 20 |
| Ex. 49 | 200 | 30 | 9% | 92 | 6.7 | Regular hexagonal | 338 | 20 |
| Ex. 50 | 200 | 30 | 9% | 92 | 6.7 | Regular hexagonal | 326 | 20 |
| Ex. 51 | 200 | 30 | 9% | 92 | 6.7 | Regular hexagonal | 311 | 20 |
| Ex. 52 | 200 | 30 | 9% | 92 | 6.7 | Regular hexagonal | 293 | 20 |
| Ex. 53 | 200 | 30 | 9% | 92 | 6.7 | Regular hexagonal | 272 | 20 |
| Ex. 54 | 200 | 30 | 9% | 92 | 6.7 | Regular hexagonal | 251 | 20 |
| Ex. 55 | 200 | 30 | 9% | 92 | 6.7 | Regular hexagonal | 245 | 20 |
| Comp. Ex. 1 | 200 | 20 | 8% | 92 | 10 | Regular hexagonal | 246 | 20 |
| Comp. Ex. 2 | 200 | 20 | 8% | 92 | 10 | Regular hexagonal | 234 | 20 |
| Comp. Ex. 3 | 150 | 20 | 10% | 91 | 7.5 | Regular hexagonal | 183 | 20 |
| Comp. Ex. 4 | 150 | 20 | 10% | 91 | 7.5 | Regular hexagonal | 175 | 20 |
| Comp. Ex. 5 | 200 | 30 | 9% | 92 | 6.7 | Regular hexagonal | 246 | 20 |
| Comp. Ex. 6 | 200 | 30 | 9% | 92 | 6.7 | Regular hexagonal | 234 | 20 |

Table 1-2-2

| | Formation of metal particle-containing layer | | | |
|---|---|---|---|---|
| | Amount of water (mL) | Amount or NaOH (mL) | Rotation number (rpm) | Rotation time (min) |
| Ex. 30 | 20 | 1 | 5000 | 5 |
| Ex. 31 | 20 | 0.85 | 5000 | 5 |
| Ex. 32 | 20 | 0.7 | 5000 | 5 |
| Ex. 33 | 20 | 0.55 | 5000 | 5 |
| Ex. 34 | 20 | 0.4 | 5000 | 5 |
| Ex. 35 | 11 | 1 | 5000 | 5 |
| Ex. 36 | 11 | 0.85 | 5000 | 5 |
| Ex. 37 | 11 | 0.7 | 5000 | 5 |
| Ex. 38 | 11 | 0.55 | 5000 | 5 |
| Ex. 39 | 11 | 0.4 | 5000 | 5 |
| Ex. 40 | 11 | 0.25 | 5000 | 5 |
| Ex. 41 | 5 | 1 | 5000 | 5 |
| Ex. 42 | 5 | 0.9 | 5000 | 5 |
| Ex. 43 | 5 | 0.8 | 5000 | 5 |
| Ex. 44 | 5 | 0.7 | 5000 | 5 |
| Ex. 45 | 5 | 0.55 | 5000 | 5 |
| Ex. 46 | 5 | 0.4 | 5000 | 5 |
| Ex. 47 | 5 | 0.25 | 5000 | 5 |
| Ex. 48 | 19 | 1 | 5000 | 5 |
| Ex. 49 | 19 | 0.91 | 5000 | 5 |
| Ex. 50 | 19 | 0.8 | 5000 | 5 |
| Ex. 51 | 19 | 0.7 | 5000 | 5 |
| Ex. 52 | 19 | 0.6 | 5000 | 5 |
| Ex. 53 | 19 | 0.51 | 5000 | 5 |
| Ex. 54 | 19 | 0.42 | 5000 | 5 |
| Ex. 55 | 19 | 0.34 | 5000 | 5 |
| Comp. Ex. 1 | 19 | 0.29 | 5000 | 5 |
| Comp, Ex. 2 | 19 | 0.25 | 5000 | 5 |
| Comp. Ex. 3 | 19 | 0.33 | 5000 | 5 |
| Comp. Ex. 4 | 19 | 0.25 | 5000 | 5 |
| Comp. Ex. 5 | 19 | 0.29 | 5000 | 5 |
| Comp. Ex. 6 | 19 | 0.25 | 5000 | 5 |

Table 1-3-1

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of particles (%) | Aspect ratio | Shape of particles | Distance between centers (nm) | Area ratio (%) |
| Ex. 1 | 200 | 20 | 8% | 92 | 10 | Regular hexagonal | 357 | 20 |
| Ex. 56 | 200 | 20 | 8% | 92 | 10 | Regular hexagonal | 357 | 20 |
| Ex. 57 | 200 | 20 | 8% | 92 | 10 | Regular hexagonal | 358 | 20 |
| Ex. 58 | 200 | 20 | 8% | 92 | 10 | Regular hexagonal | 358 | 20 |
| Ex. 59 | 200 | 20 | 8% | 92 | 10 | Regular hexagonal | 358 | 20 |
| Ex. 60 | 200 | 20 | 8% | 92 | 10 | Regular hexagonal | 359 | 20 |
| Ex. 61 | 200 | 20 | 8% | 92 | 10 | Regular hexagonal | 360 | 20 |
| Ex. 62 | 200 | 20 | 8% | 92 | 10 | Regular hexagonal | 361 | 20 |
| Ex. 63 | 200 | 20 | 8% | 92 | 10 | Regular hexagonal | 361 | 20 |
| Ex. 64 | 200 | 20 | 8% | 92 | 10 | Regular hexagonal | 363 | 20 |
| Ex. 65 | 200 | 20 | 8% | 92 | 10 | Regular hexagonal | 367 | 20 |
| Ex. 66 | 200 | 20 | 8% | 92 | 10 | Regular hexagonal | 372 | 20 |

Table 1-3-2

| | Formation of metal particle-containing layer | | | |
|---|---|---|---|---|
| | Amount of water (mL) | Amount of NaOH (mL) | Rotation number (rpm) | Rotation time (min) |
| Ex. 1 | 19 | 1 | 5000 | 5 |
| Ex. 56 | 19 | 1 | 4500 | 5 |
| Ex. 57 | 19 | 1 | 4000 | 5 |
| Ex. 58 | 19 | 1 | 3500 | 5 |
| Ex. 59 | 19 | 1 | 3000 | 5 |
| Ex. 60 | 19 | 1 | 2500 | 5 |
| Ex. 61 | 19 | 1 | 2000 | 5 |
| Ex. 62 | 19 | 1 | 1500 | 5 |
| Ex. 63 | 19 | 1 | 1000 | 5 |
| Ex. 64 | 19 | 1 | 500 | 5 |

(continued)

| | Formation of metal particle-containing layer | | | |
|---|---|---|---|---|
| | Amount of water (mL) | Amount of NaOH (mL) | Rotation number (rpm) | Rotation time (min) |
| Ex. 65 | 19 | 1 | 500 | 1 |
| Ex. 66 | 19 | 1 | 100 | 1 |

Table 1-4-1

| | Flat metal particles | | | | | | | |
|---|---|---|---|---|---|---|---|---|
| | Avg. circle-eq. diameter (nm) | Avg. thickness (nm) | CV of avg. circle-eq. diameters | Rate of Rated of particles (%) | Aspect ratio | Shape of particles | Distance between centers (nm) | Area ratio (%) |
| Ex. 67 | 200 | 20 | 8% | 92 | 10 | Substantially disc-shaped | 357 | 20 |
| Ex. 68 | 200 | 20 | 8% | 92 | 10 | Substantially disc-shaped | 338 | 20 |
| Ex.69 | 200 | 20 | 8% | 92 | 10 | Substantially disc-shaped | 326 | 20 |
| Ex. 70 | 200 | 20 | 8% | 92 | 10 | Substantially disc-shaped | 311 | 20 |
| Ex. 71 | 200 | 20 | 8% | 92 | 10 | Substantially disc-shaped | 293 | 20 |
| Ex. 72 | 200 | 20 | 8% | 92 | 10 | Substantially disc-shaped | 272 | 20 |
| Ex. 73 | 200 | 20 | 8% | 92 | 10 | Substantially disc-shaped | 251 | 20 |
| Ex. 74 | 200 | 20 | 8% | 92 | 10 | Substantially disc-shaped | 245 | 20 |

Table 1-4-2

| | Formation of metal particle-containing layer | | | |
|---|---|---|---|---|
| | Amount of water (mL) | Amount of NaOH (mL) | Rotation number (rpm) | Rotation time (min) |
| Ex. 67 | 19 | 1 | 5000 | 5 |
| Ex. 68 | 19 | 0.91 | 5000 | 5 |
| Ex. 69 | 19 | 0.8 | 5000 | 5 |
| Ex. 70 | 19 | 0.7 | 5000 | 5 |
| Ex. 71 | 19 | 0.6 | 5000 | 5 |
| Ex. 72 | 19 | 0.51 | 5000 | 5 |
| Ex. 73 | 19 | 0.42 | 5000 | 5 |
| Ex. 74 | 19 | 0.34 | 5000 | 5 |

Table 1-5-1

| | Flat metal particles | | | | | | | | |
|---|---|---|---|---|---|---|---|---|---|
| | Avg. circle-eq. diameter (nm) | Avg. thickness (nm) | CV of avg. circle-eq. diameters | Rate of particles (%) | Aspect ratio | Shape of particles | Distance between centers (nm) | Thickness of shell (nm) | Area ratio of silver (%) |
| Ex. 75 | 200 | 20 | 8% | 92 | 10 | Regular hexagonal | 360 | 30 | 20 |
| Ex. 76 | 200 | 20 | 8% | 92 | 10 | Regular hexagonal | 295 | 30 | 20 |
| Ex. 77 | 200 | 20 | 8% | 92 | 10 | Regular hexagonal | 240 | 30 | 20 |

Table 1-5-2

| | Formation of metal particle-containing layer | | | |
|---|---|---|---|---|
| | Amount of water (mL) | Amount of NaOH (mL) | Rotation number (rpm) | Rotation time (min) |
| Ex. 75 | 19 | 1 | 5000 | 5 |
| Ex. 76 | 19 | 0.6 | 5000 | 5 |
| Ex. 77 | 19 | 0.3 | 5000 | 5 |

Table 2-1

| | Complex refractive index of surrounding medium | Coefficient of lent of variation (CV) (%) | Haze (%) | Peak wavelength of reflectance (nm) | Solar heat gain coefficient (%) | Visible light ray transmittance (%) | Visible light ray reflectance (%) | Surface resistance (Ω/sq.) | Wavelength at which the minimum transmittance appears (nm) |
|---|---|---|---|---|---|---|---|---|---|
| Ex. 1 | 1.5 | 1.22 | 0.08 | 1,000 | 68 | 84 | 11 | $9.9\times10^{12}$ | 1,000 |
| Ex. 2 | 1.5 | 3.04 | 0.16 | 1,000 | 68 | 84 | 11 | $9.9\times10^{12}$ | 1,000 |
| Ex. 3 | 1.5 | 5.46 | 0.28 | 1,000 | 68 | 83 | 11 | $9.9\times10^{12}$ | 1,000 |
| Ex. 4 | 1.5 | 6.67 | 0.43 | 1,000 | 68 | 81 | 12 | $9.9\times10^{12}$ | 1,000 |
| Ex. 5 | 1.5 | 11.31 | 0.69 | 1,000 | 68 | 81 | 12 | $9.9\times10^{12}$ | 1,000 |
| Ex. 6 | 1.5 | 14.63 | 1.02 | 1,000 | 68 | 81 | 12 | $9.9\times10^{12}$ | 1,000 |
| Ex. 7 | 1.5 | 15.3 | 1.61 | 1,000 | 69 | 81 | 12 | $9.9\times10^{12}$ | 1,000 |
| Ex. 8 | 1.5 | 19.19 | 1.98 | 1,000 | 69 | 81 | 12 | $9.9\times10^{12}$ | 1,000 |
| Ex. 9 | 1.5 | 0.68 | 0.1 | 1,000 | 59 | 77 | 13 | $9.9\times10^{12}$ | 1,000 |
| Ex. 10 | 1.5 | 4.4 | 0.31 | 1,000 | 59 | 77 | 14 | $9.9\times10^{12}$ | 1,000 |
| Ex. 11 | 1.5 | 6.5 | 0.51 | 1,000 | 59 | 76 | 14 | $9.9\times10^{12}$ | 1,000 |
| Ex. 12 | 1.5 | 8.59 | 0.84 | 1,000 | 60 | 75 | 14 | $9.9\times10^{12}$ | 1,000 |
| Ex. 13 | 1.5 | 10.51 | 1.1 | 1,000 | 60 | 74 | 14 | $9.9\times10^{12}$ | 1,000 |
| Ex. 14 | 1.5 | 13.91 | 2.17 | 1,000 | 60 | 73 | 14 | $9.9\times10^{12}$ | 1,000 |
| Ex. 15 | 1.5 | 15.65 | 2.71 | 1,000 | 61 | 73 | 15 | $9.9\times10^{12}$ | 1,000 |
| Ex. 16 | 1.5 | 2.7 | 0.19 | 1,000 | 51 | 69 | 17 | $9.9\times10^{12}$ | 1,000 |
| Ex. 17 | 1.5 | 5.3 | 0.34 | 1,000 | 52 | 69 | 17 | $9.9\times10^{12}$ | 1,000 |
| Ex. 18 | 1.5 | 6.5 | 0.6 | 1,000 | 52 | 68 | 17 | $9.9\times10^{12}$ | 1,000 |
| Ex. 19 | 1.5 | 8.9 | 1.79 | 1,000 | 52 | 68 | 17 | $9.9\times10^{12}$ | 1,000 |
| Ex. 20 | 1.5 | 9.8 | 2.2 | 1,000 | 53 | 67 | 18 | $9.9\times10^{12}$ | 1,000 |
| Ex. 21 | 1.5 | 2.26 | 0.2 | 1,000 | 48 | 61 | 19 | $9.9\times10^{12}$ | 1,000 |
| Ex. 22 | 1.5 | 2.99 | 0.35 | 1,000 | 48 | 61 | 20 | $9,9\times10^{12}$ | 1,000 |

(continued)

| | Complex refractive index of surrounding medium | Coefficient of lent of variation (CV) (%) | Haze (%) | Peak wavelength of reflectance (nm) | Solar heat gain coefficient (%) | Visible light ray transmittance (%) | Visible light ray reflectance (%) | Surface resistance ($\Omega$/sq.) | Wavelength at which the minimum transmittance appears (nm) |
|---|---|---|---|---|---|---|---|---|---|
| Ex. 23 | 1.5 | 4.91 | 0.52 | 1,000 | 48 | 61 | 20 | $9.9 \times 10^{12}$ | 1,000 |
| Ex. 24 | 1.5 | 5.27 | 0.68 | 1,000 | 49 | 60 | 20 | $9.9 \times 10^{12}$ | 1,000 |
| Ex. 25 | 1.5 | 6.82 | 1.48 | 1,000 | 49 | 60 | 20 | $9.9 \times 10^{12}$ | 1,000 |
| Ex. 26 | 1.5 | 1.13 | 0.19 | 1,000 | 43 | 55 | 22 | $9.9 \times 10^{12}$ | 1,000 |
| Ex. 27 | 1.5 | 2.18 | 0.21 | 1,000 | 43 | 55 | 22 | $9.9 \times 10^{12}$ | 1,000 |
| Ex. 28 | 1.5 | 3.23 | 0.35 | 1,000 | 43 | 55 | 22 | $9.9 \times 10^{12}$ | 1,000 |
| Ex. 29 | 1.5 | 3.93 | 0.55 | 1,000 | 43 | 56 | 22 | $9.9 \times 10^{12}$ | 1,000 |

Table 2-2

| | Complex refractive index of surrounding medium | Coefficient of variation (CV) (%) | Haze (%) | Peak wavelength of reflectance (nm) | Solar heat gain coefficient (%) | Visible light ray transmittance | Visible light ray reflectance (%) | Surface resistance (Ω/sq.) | Wavelength at which the minimum transmittance appears (nm) |
|---|---|---|---|---|---|---|---|---|---|
| Ex. 30 | 1.5 | 3.28 | 0.11 | 800 | 67 | 78 | 10 | $9.9 \times 10^{12}$ | 800 |
| Ex. 31 | 1.5 | 5.93 | 0.17 | 800 | 67 | 78 | 11 | $9.9 \times 10^{12}$ | 800 |
| Ex. 32 | 1.5 | 7.63 | 0.42 | 800 | 67 | 78 | 11 | $9.9 \times 10^{12}$ | 800 |
| Ex. 33 | 1.5 | 13.35 | 0.74 | 800 | 67 | 78 | 11 | $9.9 \times 10^{12}$ | 800 |
| Ex. 34 | 1.5 | 19.74 | 1.3 | 800 | 68 | 77 | 12 | 9.9x012. | 800 |
| Ex. 35 | 1.5 | 3.91 | 0.21 | 800 | 58 | 66 | 15 | $9.9 \times 10^{12}$ | 800 |
| Ex. 36 | 1.5 | 6.31 | 0.29 | 800 | 58 | 66 | 15 | $9.9 \times 10^{12}$ | 800 |
| Ex. 37 | 1.5 | 7.97 | 0.7 | 800 | 58 | 66 | 15 | $9.9 \times 10^{12}$ | 800 |
| Ex. 38 | 1.5 | 9.36 | 0.78 | 800 | 59 | 65 | 15 | $9.9 \times 10^{12}$ | 800 |
| Ex. 39 | 1.5 | 12.61 | 1.04 | 800 | 59 | 65 | 16 | $9.9 \times 10^{12}$ | 800 |
| Ex. 40 | 1.5 | 14.71 | 2.96 | 800 | 59 | 65 | 16 | $9.9 \times 10^{12}$ | 800 |
| Ex. 41 | 1.5 | 1.71 | 0.1 | 800 | 50 | 55 | 20 | $9.9 \times 10^{12}$ | 800 |
| Ex. 42 | 1.5 | 2.95 | 0.13 | 800 | 50 | 55 | 20 | $9.9 \times 10^{12}$ | 800 |
| Ex. 43 | 1.5 | 4.07 | 0.23 | 800 | 50 | 55 | 20 | $9.9 \times 10^{12}$ | 800 |
| Ex. 44 | 1.5 | 5.54 | 0.37 | 800 | 50 | 55 | 21 | $9.9 \times 10^{12}$ | 800 |
| Ex. 45 | 1.5 | 7.58 | 0.78 | 800 | 51 | 54 | 21 | $9.9 \times 10^{12}$ | 800 |
| Ex. 46 | 1.5 | 8.15 | 1.82 | 800 | 51 | 54 | 21 | $9.9 \times 10^{12}$ | 800 |
| Ex. 47 | 1.5 | 8.37 | 2.38 | 800 | 51 | 5 | 21 | $9.9 \times 10^{12}$ | 800 |
| Ex. 48 | 1.5 | 1.22 | 0.19 | 900 | 64 | 80 | 14 | $9.9 \times 10^{12}$ | 900 |
| Ex. 49 | 1.5 | 3.04 | 0.35 | 900 | 64 | 78 | 14 | $9.9 \times 10^{12}$ | 900 |
| Ex. 50 | 1.5 | 5.46 | 0.64 | 900 | 64 | 77 | 14 | $9.9 \times 10^{12}$ | 900 |
| Ex. 51 | 1.5 | 6.67 | 0.89 | 900 | 65 | 76 | 15 | $9.9 \times 10^{12}$ | 900 |

(continued)

| | Complex refractive index of surrounding medium | Coefficient of variation (CV) (%) | Haze (%) | Peak wavelength of reflectance (nm) | Solar heat gain coefficient (%) | Visible light ray transmittance | Visible light ray reflectance (%) | Surface resistance ($\Omega$/sq.) | Wavelength at which the minimum transmittance appears (nm) |
|---|---|---|---|---|---|---|---|---|---|
| Ex. 52 | 1.5 | 11.31 | 1.45 | 900 | 65 | 75 | 15 | $9.9 \times 10^{12}$ | 900 |
| Ex. 53 | 1.5 | 14.63 | 2.15 | 900 | 65 | 75 | 15 | $9.9 \times 10^{12}$ | 900 |
| Ex. 54 | 1.5 | 15.3 | 3.39 | 900 | 65 | 74 | 16 | $9.9 \times 10^{12}$ | 900 |
| Ex. 55 | 1.5 | 19.19 | 4.14 | 900 | 65 | 74 | 16 | $9.9 \times 10^{12}$ | 900 |
| Comp. Ex. 1 | 1.5 | 22.19 | 2.59 | 1000 | 69 | 81 | 12 | $9.9 \times 10^{12}$ | 1000 |
| Comp. Ex. 2 | 1.5 | 27.17 | 3.17 | 1000 | 69 | 80 | 13 | $9.9 \times 10^{12}$ | 1000 |
| Comp. Ex. 3 | 1.5 | 21.64 | 2.11 | 800 | 68 | 77 | 12 | $9.9 \times 10^{12}$ | 800 |
| Comp. Ex. 4 | 1.5 | 28 | 3.25 | 800 | 68 | 76 | 13 | $9.9 \times 10^{12}$ | 800 |
| Comp. Ex. 5 | 1.5 | 22.19 | 5.37 | 900 | 65 | 73 | 16 | $9.9 \times 10^{12}$ | 900 |
| Camp. Ex. 6 | 1.5 | 27.17 | 6.5 | 900 | 66 | 72 | 17 | $9.9 \times 10^{12}$ | 900 |

Table 2-3

| | Thickness of binder (µm) | Complex refractive index of surrounding medium | Coefficient of variation (CV) (%) | Haze (%) | Peak wavelength of reflectance (nm) | Solar heat gain coefficient (%) | Visible light ray transmittance (%) | Visible light ray reflectance (%) | Surface resistance (Ω/sq.) | Wavelength at which the min. transmittance appears (nm) |
|---|---|---|---|---|---|---|---|---|---|---|
| Ex. 1 | 0.02 | 1.5 | 1.22 | 0.08 | 1000 | 68 | 84 | 11 | $9.9 \times 10^{12}$ | 1000 |
| Ex. 56 | 0.04 | 1.5 | 1.22 | 0.09 | 1000 | 68 | 84 | 12 | $9.9 \times 10^{12}$ | 1000 |
| Ex. 57 | 0.06 | 1.5 | 1.22 | 0.1 | 1000 | 68 | 84 | 12 | $9.9 \times 10^{12}$ | 1000 |
| Ex. 58 | 0.08 | 1.5 | 1.22 | 0.11 | 1000 | 68 | 83 | 12 | $9.9 \times 10^{12}$ | 1000 |
| Ex. 59 | 0.1 | 1.5 | 1.22 | 0.13 | 1000 | 68 | 83 | 12 | $9.9 \times 10^{12}$ | 1000 |
| Ex. 60 | 0.12 | 1.5 | 1.22 | 0.15 | 1000 | 69 | 83 | 12 | $9.9 \times 10^{12}$ | 1000 |
| Ex. 61 | 0.14 | 1.5 | 1.22 | 0.17 | 1000 | 69 | 83 | 12 | $9.9 \times 10^{12}$ | 1000 |
| Ex. 62 | 0.16 | 1.5 | 1.22 | 0.19 | 1000 | 69 | 82 | 12 | $9.9 \times 10^{12}$ | 1000 |
| Ex. 63 | 0.18 | 1.5 | 1.22 | 0.21 | 1000 | 69 | 82 | 12 | $9.9 \times 10^{12}$ | 1000 |
| Ex. 64 | 0.2 | 1.5 | 1.22 | 0.23 | 1000 | 69 | 82 | 12 | $9.9 \times 10^{12}$ | 1000 |
| Ex. 65 | 0.25 | 1.5 | 1.22 | 0.27 | 1000 | 69 | 81 | 12 | $9.9 \times 10^{12}$ | 1000 |
| Ex. 66 | 0.3 | 1.5 | 1.22 | 0.31 | 1000 | 70 | 80 | 12 | $9.9 \times 10^{12}$ | 1000 |

Table 2-4

| | Complex refractive index of surrounding medium | Coefficient of variation (CV) (%) | Haze (%) | Peak wavelength of reflectance (nm) | Solar heat gain coefficient (%) | Visible light ray transmittance (%) | Visible light ray reflectance (%) | Surface resistance (Ω/sq) | Wavelength at which the minimum transmittance appears (nm) |
|---|---|---|---|---|---|---|---|---|---|
| Ex. 67 | 1.5 | 1.3 | 0.08 | 1,000 | 66 | 85 | 11 | $9.9\times10^{12}$ | 1,000 |
| Ex. 68 | 1.5 | 3.1 | 0.15 | 1,000 | 66 | 85 | 11 | $9.9\times10^{12}$ | 1,000 |
| Ex. 69 | 1.5 | 5.5 | 0.27 | 1,000 | 66 | 84 | 11 | $9.9\times10^{12}$ | 1,000 |
| Ex. 70 | 1.5 | 6.4 | 0.42 | 1,000 | 67 | 82 | 12 | $9.9\times10^{12}$ | 1,000 |
| Ex. 71 | 1.5 | 11.1 | 0.67 | 1,000 | 67 | 81 | 12 | $9.9\times10^{12}$ | 1,000 |
| Ex. 72 | 1.5 | 14.2 | 1.02 | 1,000 | 68 | 81 | 12 | $9.9\times10^{12}$ | 1,000 |
| Ex. 73 | 1.5 | 15 | 1.59 | 1,000 | 69 | 81 | 12 | $9.9\times10^{12}$ | 1,000 |
| Ex. 74 | 1.5 | 18.9 | 1.95 | 1,000 | 69 | 81 | 12 | $9.9\times10^{12}$ | 1,000 |

Table 2-5

| | Complex retroactive index of surrounding medium | Coefficient of variation (CV) (%) | Haze (%) | Peak wavelength of reflectance (nm) | Solar heat gain coefficient (%) | Visible light ray transmittance (%) | Visible light ray reflectance (%) | Surface resistance (Ω/sq.) | Wavelength at which the minimum transmittance appears (nm) |
|---|---|---|---|---|---|---|---|---|---|
| Ex. 75 | 1.5 | 1.1 | 0.08 | 850 | 63 | 77 | 10 | $9.9\times10^{12}$ | 850 |
| Ex. 76 | 1.5 | 11.5 | 0.95 | 850 | 64 | 77 | 11 | $9.9\times10^{12}$ | 850 |
| Ex. 77 | 1.5 | 20 | 1.91 | 850 | 65 | 76 | 11 | $9.9\times10^{12}$ | 850 |

Industrial Applicability

The heat ray-shielding material of the present invention has high reflection wavelength selectivity and reflection band selectivity and is excellent in visible light ray transmittance and radio wave transmittance. Thus, it can be suitably used as various members required for shielding heat rays, such as glass of vehicles (e.g., automobiles and buses) and building glass.

Reference Sings List

1:   Substrate

2:   Metal particle-containing layer

3:   Flat metal particles

4:   Binder

**Claims**

**1.** A heat-ray shielding material comprising:

a substrate; and
a metal particle-containing layer containing at least one kind of metal particles,
the metal particle-containing layer being on the substrate,
wherein the metal particles contain flat metal particles each having a substantially hexagonal shape or a substantially disc shape in an amount of 60% by number or more, and
wherein a coefficient of variation of a distribution of distances between centers of the flat metal particles adjacent to each other is 20% or less.

**2.** The heat-ray shielding material according to claim 1, wherein when the heat ray-shielding material is viewed from above of the heat-ray shielding material, an area ratio [(B/A) x 100] is 20% or higher where A is an area of the substrate and B is a total value of areas of the flat metal particles.

**3.** The heat-ray shielding material according to claim 1 or 2, wherein the coefficient of variation of a distribution of distances between centers of the flat metal particles adjacent to each other is 15% or less.

**4.** The heat-ray shielding material according to claim 1, wherein the coefficient of variation of a distribution of distances between centers of the flat metal particles adjacent to each other is 11% or less and when the heat ray-shielding material is viewed from above of the heat-ray shielding material, an area ratio [(B/A) $\times$ 100] is 30% or higher where A is an area of the substrate and B is a total value of areas of the flat metal particles.

**5.** The heat-ray shielding material according to claim 1, wherein the coefficient of variation of a distribution of distances between centers of the flat metal particles adjacent to each other is 6.5% or less and when the heat ray-shielding material is viewed from above of the heat-ray shielding material, an area ratio [(B/A) $\times$ 100] is 40% or higher where A is an area of the substrate and B is a total value of areas of the flat metal particles.

**6.** The heat-ray shielding material according to claim 1, wherein the coefficient of variation of a distribution of distances between centers of the flat metal particles adjacent to each other is 5% or less and when the heat ray-shielding material is viewed from above of the heat-ray shielding material, an area ratio [(B/A) $\times$ 100] is 45% or higher where A is an area of the substrate and B is a total value of areas of the flat metal particles.

**7.** The heat-ray shielding material according to claim 1, wherein the coefficient of variation of a distribution of distances between centers of the flat metal particles adjacent to each other is 3.5% or less and when the heat ray-shielding material is viewed from above of the heat-ray shielding material, an area ratio [(B/A) $\times$ 100] is 50% or higher where A is an area of the substrate and B is a total value of areas of the flat metal particles.

8. The heat-ray shielding material according to any one of claims 1 to 7, wherein the flat metal particles contain at least silver.

9. The heat-ray shielding material according to any one of claims 1 to 8, wherein a thickness of a region where the flat metal particles are present is 100 nm or smaller.

10. The heat-ray shielding material according to any one of claims 1 to 9, wherein the heat-ray shielding material has a solar heat gain coefficient of 70% or lower.

11. The heat-ray shielding material according to any one of claims 1 to 10, wherein the heat-ray shielding material has a transmittance of 60% or higher with respect to visible light rays.

# FIG. 1A

# FIG. 1B

# FIG. 2

# FIG. 3A

# FIG. 3B

$+\theta$   $-\theta$

# FIG. 3C

# FIG. 4

# FIG. 5

# FIG. 6

20%

40%

45%

50%

CV (%) of distances between centers of particles

# FIG. 7

30%

20%

40%

CV (%) of distances between centers of particles

# FIG. 8

CV (%) of distances between centers of particles

# FIG. 9

# FIG. 10A

# FIG. 10B

# FIG. 10C

# FIG. 11

## INTERNATIONAL SEARCH REPORT

| International application No. |
| --- |
| PCT/JP2011/060509 |

A. CLASSIFICATION OF SUBJECT MATTER
*G02B5/26*(2006.01)i, *C03C17/28*(2006.01)i

According to International Patent Classification (IPC) or to both national classification and IPC

B. FIELDS SEARCHED

Minimum documentation searched (classification system followed by classification symbols)
G02B5/26, C03C17/28

Documentation searched other than minimum documentation to the extent that such documents are included in the fields searched
Jitsuyo Shinan Koho 1922-1996 Jitsuyo Shinan Toroku Koho 1996-2011
Kokai Jitsuyo Shinan Koho 1971-2011 Toroku Jitsuyo Shinan Koho 1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| E,A | JP 2011-118347 A (Fujifilm Corp.), 16 June 2011 (16.06.2011), entire text; all drawings (Family: none) | 1-11 |
| A | JP 2007-178915 A (Fujifilm Corp.), 12 July 2007 (12.07.2007), paragraphs [0027] to [0033], [0100] to [0120] (Family: none) | 1-11 |
| A | JP 2-197802 A (Matsushita Electric Works, Ltd.), 06 August 1990 (06.08.1990), page 2, upper left column, line 12 to page 5, lower left column, line 7; fig. 1 to 3 (Family: none) | 1-11 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 July, 2011 (15.07.11) | 26 July, 2011 (26.07.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/060509

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-507386 A  (3M Innovative Properties Co.),<br>11 March 2004 (11.03.2004),<br>paragraphs [0016] to [0042]<br>& US 2004/0013868 A1    & EP 1313923 A<br>& WO 2002/018133 A2    & DE 10042464 A<br>& AU 7923601 A        & CA 2418005 A | 1-11 |

Form PCT/ISA/210 (continuation of second sheet) (July 2009)

## REFERENCES CITED IN THE DESCRIPTION

**Patent documents cited in the description**

- JP 3454422 B
- JP 2007108536 A
- JP 2007178915 A
- JP 2007138249 A
- JP 2007138250 A
- JP 2007154292 A
- JP 3734376 B

**Non-patent literature cited in the description**

- *Langmuir,* 2000, vol. 16, 2731-2735
- **P. WINSEMIUS.** *J. Phys.,* 1976, vol. F6, 1583